# EUROPEAN PATENT SPECIFICATION

(11) **EP 4 624 031 B1**
(45) Date of publication and mention of the grant of the patent: **09.09.2026**
(21) Application number: 25166276.3
(22) Date of filing: 26.03.2025
(51) Int. Cl.: B01F 27/808, B01F 27/88, B01F 27/1152, B01F 25/85, B01F 25/00, B01F 33/501, B01F 33/81, B01F 35/42, B01F 35/31, B01F 35/32, B01F 35/43, B01F 35/30, A47J 31/40, A47J 43/046, B01F 101/00

(54) **MIXING DEVICE**
MISCHVORRICHTUNG
DISPOSITIF DE MÉLANGE

(30) Priority: 30.03.2024 CN 202410383221
(43) Date of publication of application: 01.10.2025
(73) Proprietor: Kalerm Technology (Suzhou) Co., Ltd, Suzhou Jiangsu 215134 (CN)
(72) Inventor: LU, Dean, Jiangsu (CN); LIU, Wang, Jiangsu (CN); CHEN, Wenjia, Jiangsu (CN)
(74) Representative: Murgitroyd & Company

(56) References cited:
- EP-B1- 2 865 305
- WO-A1-2015/132132
- CN-A- 116 406 937
- DE-A1- 19 954 446
- US-A1- 2023 241 567

## Description

### CROSS-REFERENCE TO RELATED APPLICATIONS

The present application claims priority to Chinese Patent Application 202410383221.5, filed on March 30, 2024.

### TECHNICAL FIELD

The present invention relates to the field of technologies of a device for mixing food, ingredients, and the like with a liquid to produce a beverage, and in particular, to a mixing device.

### BACKGROUND

Existing beverage devices, such as a self-service coffee machine, a milk tea machine, generally prepare beverages such as espresso, other coffee beverages, dairy beverages, chocolate beverages by mixing soluble food powders or liquid food concentrates with a liquid. To prepare beverages with different tastes and flavors, a mixer plays a very important role in the existing beverage devices. The mixer is capable of adjusting various setting, for example, a type and blending ratio of powders, a water temperature, a stirring speed, a stirring time to prepare beverages with different tastes and flavors.

A mixer generally includes a mixing chamber, and soluble powders and a liquid are fed in this mixing chamber. A beverage is dispensed and discharged from the bottom of the mixing chamber subsequently for drinking. Since the beverage is prepared by fully mixing the soluble powders and the liquid in the mixer, so that there may be residual beverage or powdery ingredients on a surface and interior of the mixer. Moreover, the mixer is operated in an open environment, and contacts with air and a liquid every day. To prevent the residual beverage or powdery ingredients in the mixer from mildewing and deteriorating, the mixing chamber and its internal parts must be cleaned regularly to avoid bacterial growth and blockage caused by the residues in the mixer.

To perform a cleaning operation, the mixing chamber and its internal parts must be disassembled for cleaning, and then reassembled. Such operation is time-consuming and must be carried out by a professional, such as an operator who specialize in maintaining a beverage preparation machine, thereby avoiding errors and malfunctions in subsequent preparation of a beverage.

However, such cleaning is time-consuming and costly for a user, and it is also difficult for the user to carry out.

EP 2865305 B1 discloses a mixing device according to the preamble of claim 1. It further discloses a blending appliance having a housing including a motor compartment and a jar receiving portion spaced laterally therefrom. The jar receiving portion includes an upper retaining member. A motor is disposed in the motor compartment. A support pad is operably coupled to the housing. Ajar includes a lid with a feed chute. The jar and lid are configured for reception in the jar receiving portion. The lid is vertically secured onto the jar by the upper retaining member upon reception of the jar into the jar receiving portion. A blade assembly is disposed within the jar and is magnetically coupled to a drive system disposed within a base portion of the housing. A brake mechanism is coupled to the magnetic coupling assembly to stop the rotation of the blade assembly when the jar is laterally removed from the housing base.

DE 19954446 A1 discloses a mixing container for blending, which includes a substantially cylindrical container body and is sealed by a lid. The stirring device includes a shaft which is accommodated inside the mixing container and extends through the lid. The portion of the shaft accommodated inside the mixing container is provided with at least one blade for stirring the contents inside the mixing container when the shaft rotates. One free end of the drive shaft is provided with a connecting piece, referred to as a driving connecting piece. The other free end of the shaft, that is, the portion extending above the lid, is provided with a driven part which is designed in a form-fitting manner to match the aforementioned driving connecting piece, and engages with the driving connecting piece when the mixing container is positioned in the apparatus. The frame of the mixing container is provided with a drive device.

US 2023/241567 A1 discloses a capsule for mixing multiple substances, comprising: a main chamber having a main chamber bottom and a main chamber top, the main chamber top having a top opening; a main piston fitted in the main chamber; a torque adapter for transferring a torque from an external actuator to a mixer element via the main chamber bottom; and a cup shaped reservoir having a reservoir bottom which is having a bottom opening, wherein the reservoir bottom is fixated to the main chamber top such that the bottom opening is aligned with the top opening of the main chamber, so that fluid pushed by the main piston from the main chamber is passed through the top opening and the bottom opening and is accumulated in the cup shaped reservoir.

### SUMMARY

A purpose of the present invention is to provide a mixing device that is convenient for disassembling and cleaning.

To achieve the above-mentioned purpose, the present invention provides a mixing device including:
a supporting base having an installation part;
a mixer assembly detachably connected to the installation part, and including a mixing barrel and a stirring blade located inside the mixing barrel;
a motor disposed on the supporting base, and configured to drive the stirring blade to rotate around a first rotation axis; in which
in a direction perpendicular to the first rotation axis, an axis of the motor is misaligned with the first rotation axis; and the mixing device also includes a transmission mechanism disposed between the motor and the stirring blade, the transmission mechanism is configured to connect the motor and the stirring blade, the transmission mechanism includes a first transmission member and a second transmission member; and the first transmission member is disposed on the installation part, and is connected to the motor in a transmission way, and the second transmission member is connected to the stirring blade in a transmission manner; and the second transmission member and the mixer assembly are connected to or separated from the installation part as an integral unit, where
the mixer assembly also includes a locking part connected to the mixing barrel, and the mixer assembly is connected to or separated from the installation part in a first direction; the locking part is capable of moving relative to the mixing barrel and is fixed relative to the mixing barrel in the first direction; and the locking part is capable of switching between a locking state and an unlocking state relative to the installation part. In the locking state, the installation part limits movement of the locking part in the first direction; and in the unlocked state, the installation part releases the locking part, and the locking part is allowed to move in the first direction; and
the installation part includes a top plate, a bottom plate, and a side plate, the top plate and the bottom plate are disposed opposite to each other in a vertical direction, and the side plate connects the top plate and the bottom plate; the top plate, the bottom plate, and the side plate define an accommodating cavity together, the accommodating cavity has an installation opening, the top plate is provided a placing groove communicating with the installation opening, and the mixer assembly enters the placing groove in the first direction from the installation opening; and a portion of the mixer assembly is located in the accommodating cavity, and is limited by the top plate in the first rotational axis direction, where
the mixing barrel includes a feeding chamber and a mixing chamber communicating with each other in a vertical direction, the stirring blade is located inside the mixing chamber, the bottom of the mixing chamber radially extends outwards to form a skirt edge, and the skirt edge is limited by the top plate; or
the mixing barrel includes a feeding chamber and a mixing chamber communicating with each other in a vertical direction, the stirring blade is located inside the mixing chamber, the mixing barrel includes a contraction portion, the contraction portion is disposed at a joint between the feeding chamber and the mixing chamber, the contraction portion enters the placing groove, and a top wall of the mixing chamber is limited by the top plate.

As a further improvement of an embodiment of the present invention, the mixer assembly also includes a coupling part connected to a bottom of the mixing barrel, the coupling part includes a transmission shaft, the transmission shaft connects the second transmission member and the stirring blade, and in an axial direction, the stirring blade is disposed on a side of the coupling part, and the second transmission member is disposed on another side of the coupling part.

As a further improvement of an embodiment of the present invention, a discharging outlet is disposed on a side of the coupling part corresponding to the second transmission member, the coupling part defines a supporting space, and a discharging valve is disposed in the supporting space; when the mixer assembly is connected to the installation part, the discharging valve opens the discharging outlet; and when the mixer assembly is separated from the installation part, the discharging valve closes the discharging outlet.

As a further improvement of an embodiment of the present invention, the discharging valve includes a valve body and an elastic element acting on the valve body, and the installation part is provided with a butt joint block; and the butt joint block is configured to abut against the valve body, to make the valve body overcome an action of the elastic element to open the discharging outlet.

As a further improvement of an embodiment of the present invention, the coupling part is capable of rotating relative to the mixing barrel, to limit or allow the mixer assembly to be separated from the installation part.

As a further improvement of an embodiment of the present invention, the axis of the motor is parallel to the first rotation axis, the mixer assembly is connected to or separated from the installation part in the first direction, the first direction is perpendicular to the first rotation axis; and in the first direction, the axis of the motor is disposed side by side with the first rotation axis, or in a direction perpendicular to the first direction, and the axis of the motor is disposed side by side with the first rotation axis.

As a further improvement of an embodiment of the present invention, the locking part includes a gripping part, the installation part includes the accommodating cavity for receiving the mixer assembly; in the first direction, the installation part includes an inner side where the accommodating cavity is disposed and an opposite outer side, and the gripping part is located at the outer side; and the gripping part is capable of operably drives the locking part to rotate between the locking state and the unlocking state.

As a further improvement of an embodiment of the present invention, the first rotation axis is disposed in a vertical direction, and the first direction is perpendicular to the first rotation axis; a rotation axis of the locking part is coaxial with the first rotation axis, or the rotation axis of the locking part is parallel to the first direction; and a liquid inlet pipeline is connected to the supporting base, and the liquid inlet pipeline communicates with the mixing barrel in the first direction.

As a further improvement of an embodiment of the present invention, the locking part also includes a locking block protruding from the gripping part, the installation part is provided with a locking groove. The gripping part is capable of moving relative to the mixing barrel to make the locking block engage into or disengage from the locking groove.

As a further improvement of an embodiment of the present invention, the locking part includes a connecting body that is concentrically arranged with the stirring blade, the gripping part extends outwards from an outer circumference of the connecting body, and the connecting body is disposed below the mixing chamber.

As a further improvement of an embodiment of the present invention, the connecting body includes two arc-shaped walls disposed opposite to each other and two straight walls, and the two straight walls are separately connected to the two arc-shaped walls; the two arc-shaped walls are concentrically arranged with the stirring blade, and a distance between the two straight walls is substantially the same as a width of the installation opening; the installation part is provided with a blocking wall, and in the locking state, one of the two straight walls abuts against the blocking wall; and in the unlocking state, the two straight walls are respectively flush with the installation opening.

Compared with conventional technologies, beneficial effects of the present invention lie in the following: By the second transmission member and the mixer assembly being connected to or separated from the installation part as an integral unit, a user may disassemble the mixer assembly by themselves for subsequent cleaning. Disassembly and assembly may be achieved simply by separating or connecting the integral unit in a corresponding direction, without the need for a professional to perform disassembly and maintenance, so that a maintenance cost of the mixing device for the user is reduced. By disassembling the entire mixer assembly from the supporting base, a more thorough cleaning may be achieved. At the same time, there is no requirement for disassembling the motor together, nor is it necessary to provide a corresponding clearance structure for the motor, so that a space utilization of the machine is increased, and the disassembly operation by the user is facilitated.

### BRIEF DESCRIPTION OF THE DRAWINGS

FIG. 1 is a three-dimensional schematic diagram of a mixing device according to an embodiment of the disclosure, in which the mixing device is in a locking state.
FIG. 2 is a sectional view of the mixing device in FIG. 1 along a line A-A.
FIG. 3 is a front view of the mixing device in FIG. 1.
FIG. 4 is a sectional view of the mixing device in FIG. 3 along a line B-B.
FIG. 5 is a sectional view of the mixing device in FIG. 3 along a line C-C.
FIG. 6 is an exploded three-dimensional schematic diagram of a mixer assembly of the mixing device in FIG. 1.
FIG. 7 is a three-dimensional schematic diagram of a coupling part of the mixing device in FIG. 1 from another perspective.
FIG. 8 is a three-dimensional schematic diagram of the mixing device in FIG. 1, in which the mixing device is in an unlocking state.
FIG. 9 is a sectional view of the mixing device in FIG. 8 along a line D-D.
FIG. 10 is a three-dimensional schematic diagram of the mixing device in FIG. 8, in which a mixer assembly is separated from a supporting base of the mixing device.
FIG. 11 is a three-dimensional schematic diagram of a mixing device according to another embodiment of the disclosure.
FIG. 12 is a front view of the mixing device in FIG. 11.
FIG. 13 is a sectional view of the mixing device in FIG. 12 along a line E-E.
FIG. 14 is a sectional view of the mixing device in FIG. 12 along a line F-F.
FIG. 15 is a three-dimensional schematic diagram of the mixing device in FIG. 11, in which one of mixer assemblies of the mixing device is removed from the supporting base.
FIG. 16 is a three-dimensional schematic diagram of a mixer assembly of the mixing device in FIG. 11.
FIG. 17 is an exploded three-dimensional schematic diagram of the mixer assembly in FIG. 16.
FIG. 18 is a three-dimensional schematic diagram of the mixer assembly in FIG. 16 from another perspective.
FIG. 19 is a three-dimensional schematic diagram of a mixing device according to yet another embodiment of the disclosure.
FIG. 20 is a sectional view of the mixing device in FIG. 19 along a line G-G.
FIG. 21 is a three-dimensional schematic diagram of the mixing device in FIG. 19, in which a mixer assembly is separated from the supporting base of the mixing device.
FIG. 22 is an exploded three-dimensional schematic diagram of the mixer assembly of the mixing device in FIG. 19.

### DETAILED DESCRIPTION OF THE EMBODIMENTS

The present invention will be described in detail with reference to the specific embodiments shown in the accompanying drawings. However, these embodiments do not intend to limit the present invention.

It should be understood that, terms used in the specification indicate spatial relative positions, such as "upper", "above", "lower", "below", are used for describing a relationship between one unit or feature relative to another unit or feature as shown in the accompanying drawings for the purpose of facilitating illustration. The terms relating to the spatial relative positions are aimed at including different orientations of a device during use or an operation, in addition to those orientations shown in the accompanying drawings.

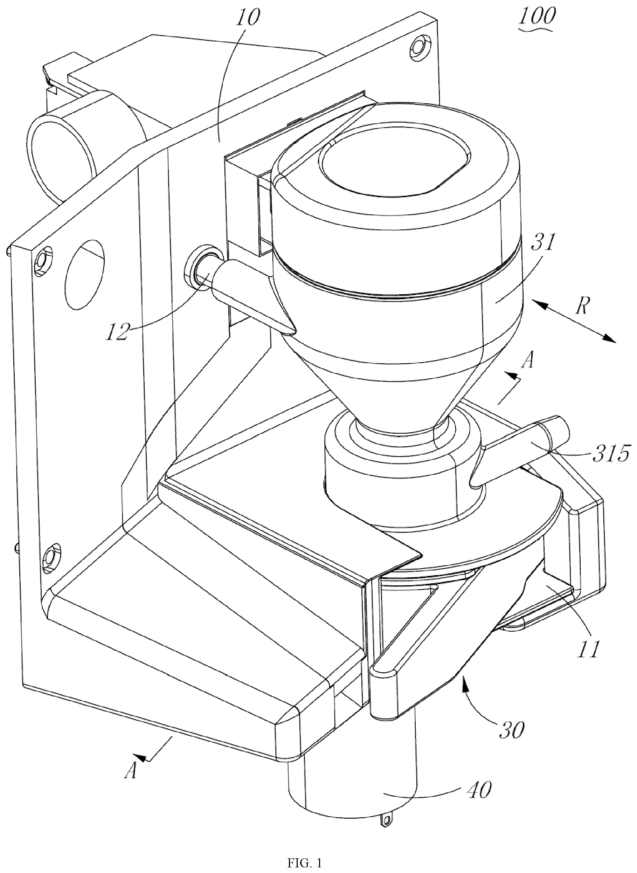

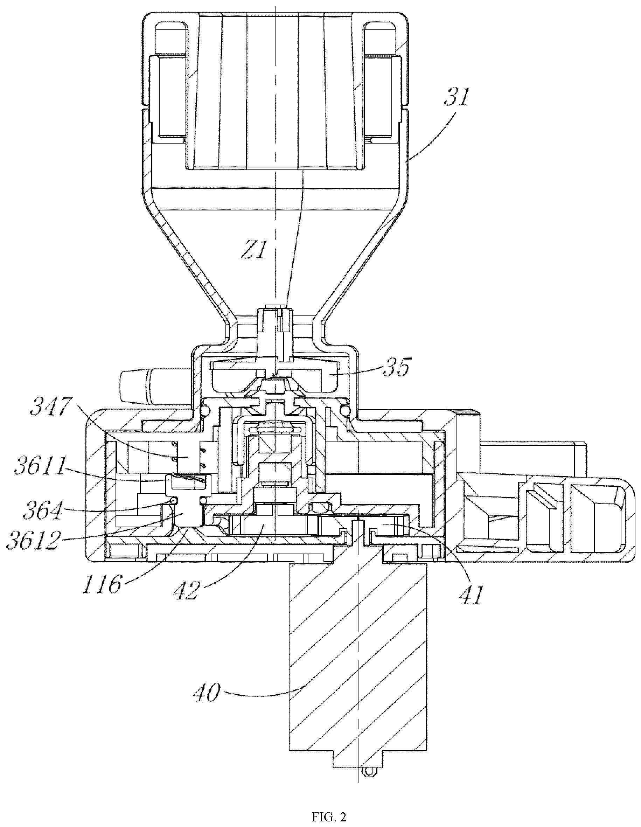

A mixing device in specific embodiments of the present invention will be described by taking a mixing device 100 for preparing a beverage by mixing powders and water as an example. Referring to FIG. 1 and FIG. 2, in a preferred implementation, the mixing device 100 includes a supporting base 10, a mixer assembly 30 installed on the supporting base 10, and a motor 40 disposed on the supporting base 10. The supporting base 10 may be a housing or a structure for supporting or connecting a functional part. The supporting base 10 has an installation part 11, and the mixer assembly 30 is connected to the installation part 11. The 4 mixer assembly 30 includes a mixing barrel 31 and a stirring blade 35 located inside the mixing barrel 31. The mixing barrel 31 is used for accommodating powders and water, and the powder to be mixed may fall into interior of the mixing barrel 31 from an upper opening of the mixing barrel 31. A liquid inlet pipeline 12 is connected to the supporting base 10, and the water to be mixed may be delivered to the interior of the mixing barrel 31 through the liquid inlet pipeline 12 communicating with the mixing barrel 31. The motor 40 drives the stirring blade 35 to rotate around a first rotation axis Z1, thereby stirring a mixture inside the mixing barrel 31. In a horizontal direction, an axis of the motor 40 is misaligned with the first rotation axis Z1. Such misalignment arrangement may be parallel or intersecting, that is, the axis of motor 40 is not collinear with the first rotation axis Z1.

The mixing device 100 also includes a transmission mechanism disposed between the motor 40 and the stirring blade 35. The transmission mechanism includes a first transmission member 41 and a second transmission member 42. The first transmission member 41 is disposed on the installation part 11, and is connected to the motor 40 in a transmission manner. The second transmission member 42 is connected to the stirring blade 35 in a transmission manner. The mixer assembly 30 is detachably connected to the installation part 11. The second transmission member 42 and the mixer assembly 30 are connected to or separated from the installation part 11 as an integral unit, so that it very convenient for a user to disassemble and assemble.

It should be noted that, the first transmission member 41 and the second transmission member 42 may be in directly or indirectly transmission connection, for example, they may be in transmission connection through other transmission members. In an example, the first transmission member 41 and the second transmission member 42 may be connected through a third transmission member (for example, a gear).

By the second transmission member 42 and the mixer assembly 30 being connected to or separated from the installation part 11 as an integral unit, a user may disassemble the mixer assembly 30 by themselves for subsequent cleaning. Disassembly and assembly may be achieved simply by separating or connecting the integral unit in a corresponding direction, without the need for a professional to perform disassembly and maintenance, so that a maintenance cost of the mixing device 100 for the user is reduced.

Specifically, the axis of motor 40 is parallel to the first rotation axis Z1 of the stirring blade 35, that is, the axis of motor 40 is offset to the first rotation axis Z1 of the stirring blade 35. The mixer assembly 30 is connected to or separated from the installation part 11 in a first direction (as indicated by an arrow R in FIG. 1), and the axis of the motor 40 and the first rotation axis Z1 of the stirring blade 35 are arranged side by side in a direction perpendicular to the first direction. In the present invention, a direction for disassembling and installing the mixer assembly 30 is defined as the first direction, and the first direction is parallel to the horizontal direction. A direction for disassembling the mixer assembly 30 is defined as a front side of the first direction, a direction for installing the mixer assembly 30 is defined as a rear side of the first direction, and two sides of the first direction are respectively defined as a left side and a right side. A direction along the first rotation axis Z1 of the stirring blade 35 is a vertical direction. The axis of the motor 40 and the first rotation axis Z1 of the stirring blade 35 are arranged side by side in a left-right manner. It may also be considered that the first transmission member 41 and the second transmission member 42 are disposed side by side. In an example, the first transmission member 41 and the second transmission member 42 are both constructed as gears. With the rotating engagement and disengagement of the two gears, the disassembly and the installation of the mixer assembly 30 are facilitated.

It may be understood that, the first transmission member 41 and the second transmission member 42 may also be connected in other transmission manners, and are not limited to gear transmission. For example, they may be connected through sprocket transmission.

In addition, the liquid inlet pipeline 12 may also be configured to communicate with the mixing barrel 31 in the first direction. When the mixer assembly 30 is connected to or separated from the installation part 11, the connection and the disconnection of a water passage is simultaneously achieved.

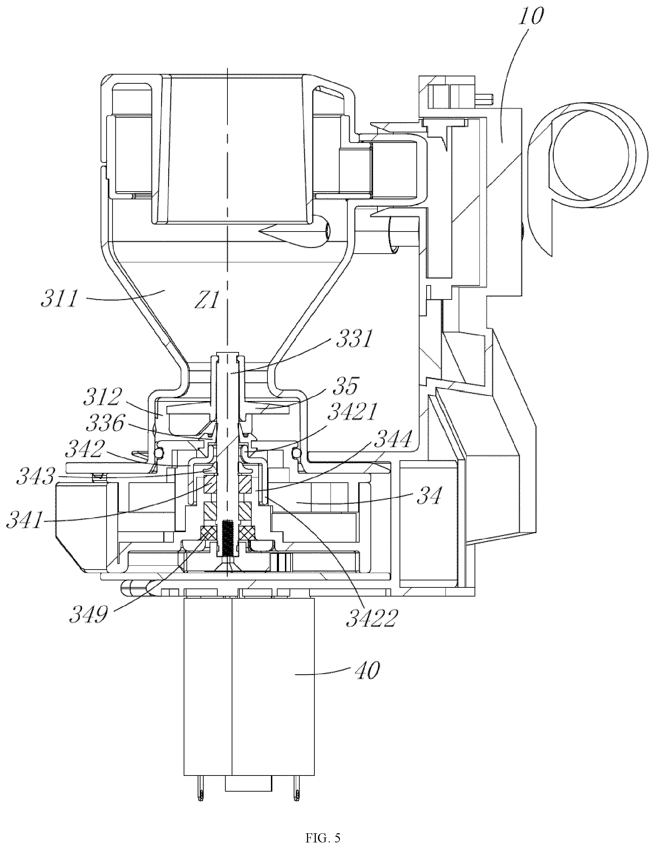

Referring to FIG. 2 to FIG. 7, the mixer assembly 30 also includes a coupling part 33 detachably connected to a bottom of the mixing barrel 31. The coupling part 33 includes a transmission shaft 331 which respectively connects the second transmission member 42 and the stirring blade 35. The stirring blade 35 is disposed on a side of the coupling part 33 in an axial direction. The second transmission member 42 is disposed on another side of the coupling part 33 in the axial direction. In the present invention, the axial direction of the coupling part 33 is an axial direction of the transmission shaft 331. The coupling part 33 is provided such that a support for the transmission shaft 331 may be provided, and thus transmission between the motor 40 and the stirring blade 35 is more reliable. Moreover, the coupling part 33 may provide a reliable installation space for a supporting part 341 of the transmission shaft 331, and may also facilitate sealing.

The coupling part 33 may include an upper cover 332 and a lower cover 333 which are assembled together by screws. A supporting space 34 is defined between the upper cover 332 and the lower cover 333, and the supporting part 341 such as a bearing, a shaft sleeve, and the like may be installed in the supporting space 34. A sealing ring 336 is disposed between the transmission shaft 331 and the upper cover 332, to prevent a liquid inside the mixing barrel 31 from leaking through a gap between the transmission shaft 331 and the upper cover 332. The upper cover 332 is also provided with an installation boss 335, and the installation boss 335 extends into the interior of the mixing barrel 31. A sealing loop 337 is disposed between the installation boss 335 and the interior of the mixing barrel 31, to prevent the liquid inside the mixing barrel 31 from leaking through a gap between the mixing barrel 31 and the upper cover 332. By providing the sealing ring 336 and the sealing loop 337, it is ensured that the liquid inside the mixing barrel 31 will not leak downwards to the coupling part 33, the transmission mechanism, and the motor 40.

In addition, in order to further enhance the sealing effect, a portion of the sealing ring 336 located in the supporting space 34 is also connected to a first guide ring 342. A bearing is supported on a bearing supporting part 344 located on the lower cover 333. An end in an axial direction of the first guide ring 342 forms a retraction part 3421. The retraction part 3421 extends into an inner side of the sealing ring 336. The first guide ring 342 also includes a widen mouth part 3422 connected below the retraction part 3421, and the widen mouth part 3422 is sleeved on an outer periphery of the bearing supporting part 344. If there is a liquid flowing out between the sealing ring 336 and the upper cover 332, the liquid may be drawn out to an outer side of the bearing supporting base 344 through the first guide ring 342. Furthermore, at a position misaligned from the retraction part 3421, the transmission shaft 331 is also provided a second guide ring 343, and the second guide ring 343 is disposed inside the first guide ring 342. A size or diameter in a radial direction of the second guide ring 343 is greater than a size or diameter of a bearing. If there is a liquid flowing out between the sealing ring 336 and the transmission shaft 331, the liquid may be drawn out to the bearing supporting part 344 through the second guide ring 343. The lower cover 333 is provided with a discharging outlet 346, that is, the discharging outlet 346 is disposed on a side of the coupling part 33 corresponding to the second transmission member 42, and the discharging outlet 346 is also disposed at a position on the coupling part 33 away from the first transmission member 41. Since the coupling part 33 has a sealing structure inside, even if water leakage occurs, an amount of the leaked liquid is relatively small, the leaked liquid may be drawn out by the first guide ring 342 and the second guide ring 343, and then be discharged from the discharging outlet 346 of the lower cover 333. When the water flows out from the discharging outlet 346, it will not directly contact or diffuse to the first transmission member 41. The first guide ring 342 and the second guide ring 343 may be made of a same or similar material as the sealing ring 336, which may not only guide the liquid, but also further enhance a sealing effect.

Furthermore, there is a sealing member 349 disposed between the bearing supporting part 344 and the transmission shaft 331. The sealing member 349 may be disposed between the second transmission member 42 and the supporting part 341, and the sealing member 349 may be constructed as an oil seal to prevent water ingress during cleaning.

In the present invention, the coupling part 33 may be disassembled together with the mixing barrel 31, and may also be disassembled from the mixing barrel 31. In order to prevent water from entering the coupling part 33 caused by a user's misoperation during cleaning, a discharging valve 36 is disposed in the supporting space 34 of the coupling part 33. As the mixer assembly 30 is connected to or separated from the installation part 11, the discharging valve 36 is capable of opening or closing the discharging outlet 346. The discharging valve 36 is capable of automatically opening and closing the discharging outlet 346 with the installation and the disassembly of the mixer assembly 30, without causing operational inconvenience for a user during cleaning of the mixer assembly 30. At the same time, it may prevent water from entering the coupling part 33, so that a service life of the mixer assembly 30 is improved.

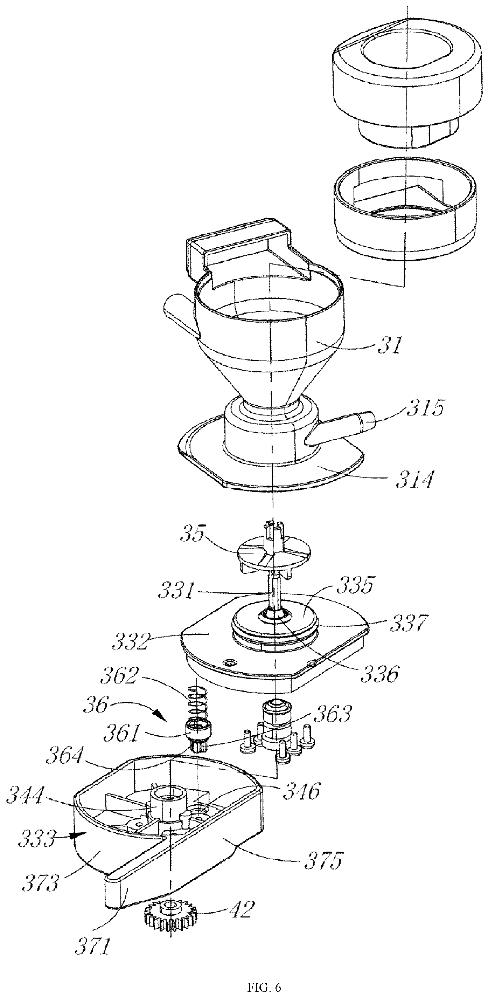

Specifically, referring to FIG. 2 and FIG. 6, the discharging valve 36 includes a valve body 361 and an elastic element 362 acting on the valve body 361. A butt joint block 116 is disposed on the installation part 11, the butt joint block 116 abuts against the valve body 361 to make the valve body 361 overcome the action of the elastic element 362, to allow the valve body 361 to open the discharging port 346. The butt joint block 116 is disposed on the installation part 11, when the mixer assembly 30 is installed, the discharging outlet 346 is opened simultaneously without an additional operation performed by a user. Among them, the elastic element 362 is constructed as a compression spring, an end of the compression spring is sleeved on a supporting rib 347 located on the upper cover 332, and another end of the compression spring is pressed against the valve body 361. The valve body 361 is constructed in a cylindrical shape, and includes a cap part 3611 and a plug part 3612 in an axial direction thereof. A part of the compression spring extends into interior of the cap part 3611, and the plug part 3612 has a groove 363 disposed in the axial direction. The groove 363 may be one groove, or may be a plurality of grooves spaced circumstantially. A sealing element 364 is sleeved on the valve body 361, and the sealing element 364 is located between the cap part 3611 and the plug part 3612. A diameter of the cap part 3611 is greater than that of the discharging outlet 346. When the mixer assembly 30 is disassembled from the installation part 11, the valve body 361 moves downwards, the sealing element 364 seals the discharging outlet 346, and the cap part 3611 may also prevent the discharging valve 36 from being directly ejected. When the mixer assembly 30 is connected to the installation part 11, the valve body 361 moves upwards, the discharging outlet 346 may communicate with both interior and exterior of the coupling part 33 through the groove 363.

In a preferred implementation, the coupling part 33 rotates relative to the mixing barrel 31 to limit or allow the disassembly of the mixer assembly 30 from the installation part 11. By rotating the coupling part 33, the mixer assembly 30 is locked with or unlocked from the installation part 11, so that a reliable use of the mixing device 100 is ensured. Moreover, it is not necessary to provide an additional locking structure, the locking is achieved by the mixer assembly 30 itself, so that the structure is simpler. Among them, the coupling part 33 serves as a locking part, and the rotation of the locking part relative to the mixing barrel 31 is capable of achieving that the locking part abuts against or is separated from the installation part 11 in the first direction. Certainly, the locking part may be one of the upper cover 332 or the lower cover 333, or other parts on the coupling part 33 which is locked and unlocked by abutting against or being separated from the installation part 11 in the first direction. Therefore, the structure is simple, and is easy to manufacture.

Certainly, the locking part may also be a part independent of the coupling part 33. The locking part is connected to the mixing barrel 31, either directly or indirectly through other parts. The locking part is capable of moving relative to the mixing barrel 31, and is fixed relative to the mixing barrel 31 in the first direction. The locking part is capable of switching between a locking state and an unlocking state relative to the installation part 11. In the locking state, the installation part 11 limits movement of the locking part in the first direction. In the unlocking state, the installation part 11 releases the locking part, and the locking part is allowed to move in the first direction. By providing the locking part connected to the mixing barrel 31, it is not only convenient for a cooperation with the installation part 11, but also facilitating the locking and unlocking of the mixer assembly 30 relative to the installation part 11, and meanwhile, the reliable use of the mixer assembly 30 is ensured.

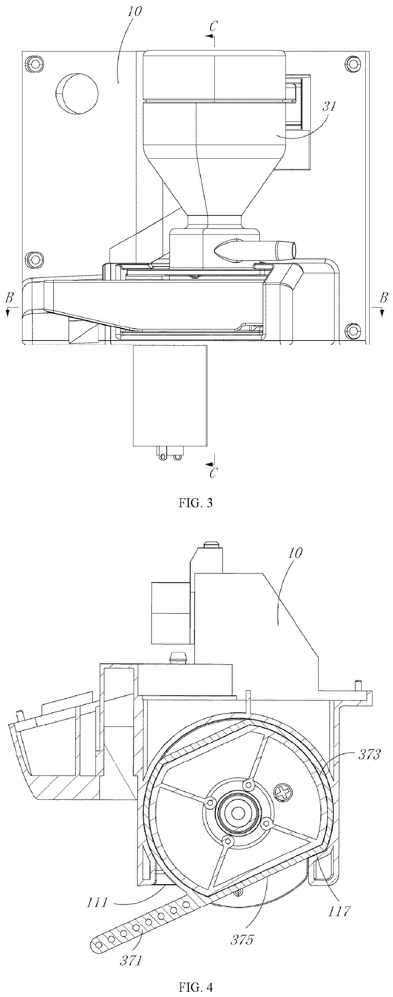

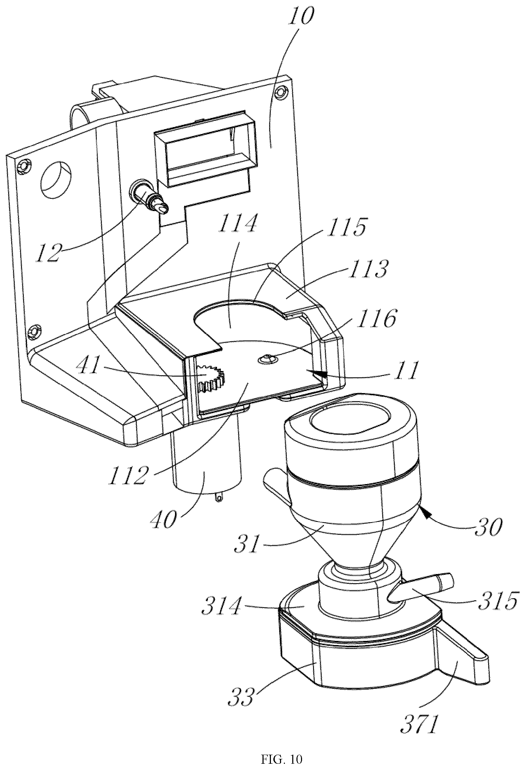

Referring to FIG. 4 and FIG. 6 to FIG. 11, the locking part includes a gripping part 371, and the installation part 11 includes an accommodating cavity 110 for receiving the mixer component 30. In the first direction, the installation part 11 includes an inner side where the accommodating cavity 110 is disposed and an opposite outer side. The gripping part 371 is located at the outer side, and the gripping part 371 operably drives the locking part to rotate between the locking state and the unlocking state. The locking part is provided with the gripping part 371, so that the unlocking, the disassembly, the installation and the locking of mixer assembly 30 is achieved in one-touch operation, and thus it is very convenient for the user. In the present embodiment, the inner side is a rear side, and the outer side is a front side.

Preferably, the first rotation axis Z1 is disposed in a vertical direction and perpendicular to the first direction, that is, the first direction is parallel to the horizontal direction. The rotation axis of the locking part is coaxial with the first rotation axis Z1, facilitating the assembly and the positioning of the locking part and the mixing barrel 31. A rotating plane of the stirring blade 35 is substantially perpendicular to a powder falling direction, so that a risk of clogging when the water powder ratio is low (when a concentration is higher) is reduced. The mixing barrel 31 includes a feeding chamber 311 and a mixing chamber 312 communicating with each other in the vertical direction, and the stirring blade 35 is located inside the mixing chamber 312. The locking part includes a connecting body concentrically arranged with the stirring blade 35, that is, the main body portion of the lower cover 333 is constructed as the connecting body, the gripping part 371 extends outwards from an outer periphery of the connecting body, and the connecting body is disposed below the mixing chamber 312. A rotation axis of the connecting body is concentrically arranged with the stirring blade 35, which facilitates positioning and connection of the connecting body.

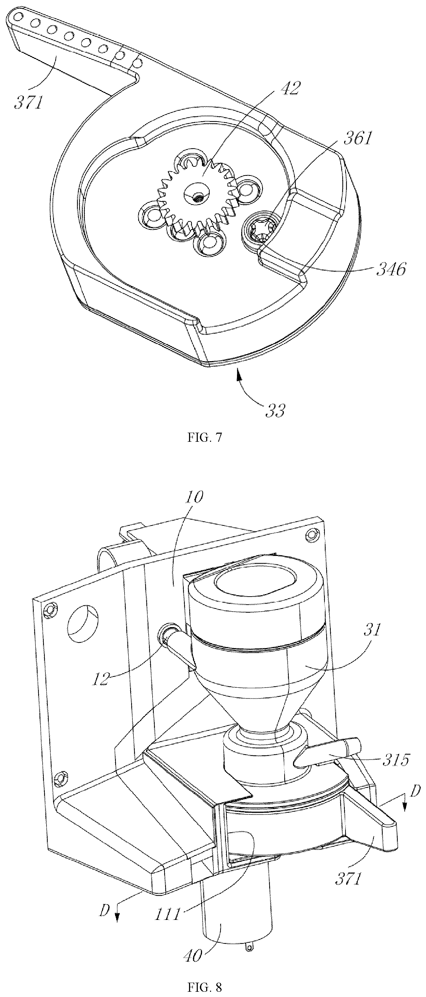

Referring to FIG. 8 to FIG. 10, the installation part 11 includes a top plate 113, a bottom plate 112, and a side plate 114. The top plate 113 and the bottom plate 112 are disposed opposite to each other in the vertical direction, and the side plate 114 connects the top plate 113 and the bottom plate 112. The top plate 113, the bottom plate 112, and the side plate 114 define an accommodating cavity 110 together. The side plate 114 includes a left side plate and a right side plate. The accommodating cavity 110 has an installation opening 111, a placing groove 115 is disposed on the top plate 113 and communicates with the installation opening 111. The mixer assembly 30 enters the placing groove 115 from the installation opening 111 in the first direction. A portion of the mixer assembly 30 is located in the accommodating cavity 110, and is limited by the top plate 113 in the direction of the first rotation axis Z1. The direction of the first rotation axis Z1 is the vertical direction, and the installation part 11 ensures the reliable use of the mixer assembly 30 by limiting its movement in the vertical direction. In one embodiment, the bottom of the mixing chamber 312 radially extends outwards to form a skirt edge 314, and the skirt edge 314 is limited by the top plate 113. The skirt edge 314 facilitates limitation of the mixing barrel 31 in the vertical direction. When the mixing barrel 31 is connected to the coupling part 33, the skirt edge 314 may increase a contact area with the coupling part 33, so that a stable support for the mixing barrel 31 is ensured. Moreover, the mixing chamber 312 is located above the installation part 11, which facilitates discharge of the mixed liquid.

Furthermore, the connecting body includes two arc-shaped walls 373 disposed opposite to each other and two straight walls 375, and the two straight walls 375 are disposed opposite to each other and separately connected to the two arc-shaped walls 373. The two arc-shaped walls 373 are concentrically arranged with the stirring blade 35, and a distance between the two straight walls 375 is equivalent to a width of the installation opening 111 (that is, a distance between the two straight walls 375 is substantially the same as a width of the installation opening 111). The installation part 11 is provided with a blocking wall 117, and in the locking state, one of the two straight walls 375 abuts against the blocking wall 117. In the unlocking state, the two straight walls 375 are respectively flush with the installation opening 111. The connecting body is locked and unlocked with the installation part 11 by rotating the connecting body and utilizing its truncated circular profile. This design is simple in the structure and convenient for being operated. The side plate 114 of the accommodating cavity 110 may be shaped to fit with the arc-shaped wall 373 to ensure a more reliable structure. Among them, the gripping part 371 may extend outwards in a direction which is flush with the straight wall 375 abutting against the blocking wall 117. In the unlocking position, the gripping part 371 substantially extends outwards in the first direction, so that there is a greater gripping area, and thus it is convenient for operation. In the locking position, the gripping part 371 is closer to the supporting base 10, so that an occupying space is small. The blocking wall 117 may be a portion of the side plate 114, and is used for cooperating with one of the straight walls 375 in the locking position, to prevent excessive rotation of the connecting body. The straight wall 375 that cooperates with the blocking wall 117 is connected to the gripping part 371, this the straight wall 375 is relatively long, and abuts against the installation opening 111 when the connecting body is rotated to the unlocking position, so that the excessive rotation of the connecting body is prevented.

In the present embodiment, the locking part is the coupling part 33. In other feasible manners, the locking part may also be one of the upper cover 332 and the lower cover 333, or it may be a part different from the upper cover 332 or the lower cover 333, such as a connecting ring movably sleeved on the coupling part 33, or a connecting ring movably sleeved on the mixing barrel 31.

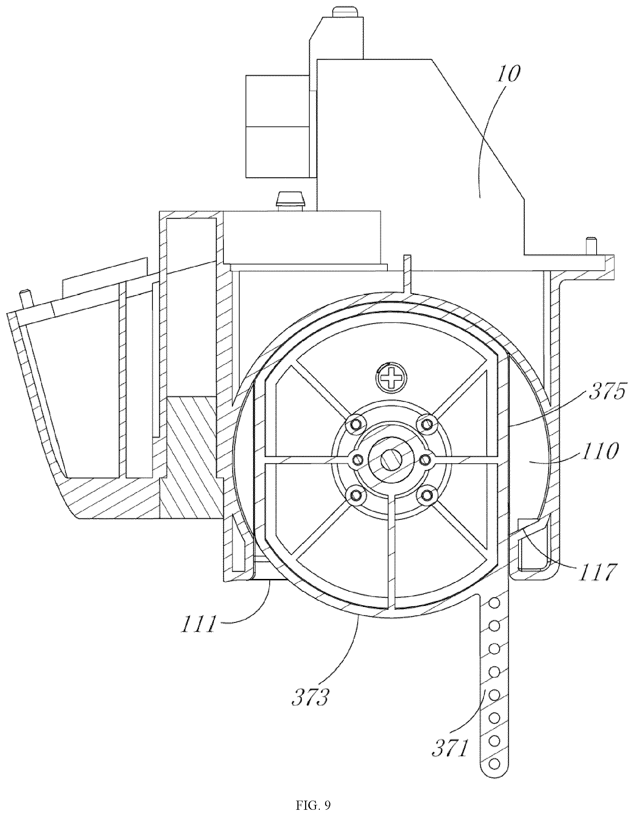

In the following, disassembly and installation processes of the mixer assembly 30 will be described in details. FIG. 1 and FIG. 4 show the mixer assembly 30 in the locking state. When it is necessary to clean the mixer assembly 30, a force is applied to the gripping part 371 in an unlocking direction. The gripping part 371 drives the locking part (the coupling part 33) to rotate relative to the installation part 11. One section of the straight wall 375 is separated from the blocking wall 117, until this section of the straight wall 375 abuts against a side wall of the installation opening 111, and then the locking between the locking part and the installation part 11 in the first direction is released. FIG. 8 and FIG. 9 show the mixer assembly 30 in the unlocking state. Since the locking part is rotated relative to the mixing barrel 31, during an unlocking process, a position of the mixing barrel 31 is unchanged relative to the supporting base 10. After being unlocked, the gripping part 371 moves outwards, and the gripping part 371 will drive the locking part (the coupling part 33), the mixing barrel 31, and the second transmission member 42 to be separated from the supporting base 10 together. The unlocking, disassembly, installation, and locking of the mixer assembly 30 on the installation part 11 may all be achieved by operating the gripping part 371. By the one-touch operation on the gripping part 371, operation steps for a user are greatly simplified, so that experience of the user is improved, and thus convenience is provided to the user. If it is required to continue to separate the locking part form the mixing barrel 31, it may be implemented by simply moving the locking part (the coupling part 33) relative to the mixing barrel 31 in the first rotation axis Z1 direction of the stirring blade 35. If it is required to clean the stirring blade 35 separately, the stirring blade 35 is removed from the transmission shaft 331, and then them are installed to their original position one by one after cleaning. By disassembling the entire mixer assembly 30 from the supporting base 10, a more thorough cleaning may be performed. Meanwhile, it is not necessary to remove the motor 40 together or provide a corresponding relief structure for the motor 40, so that a space utilization of the machine is increased, and it is convenient for a user to disassemble.

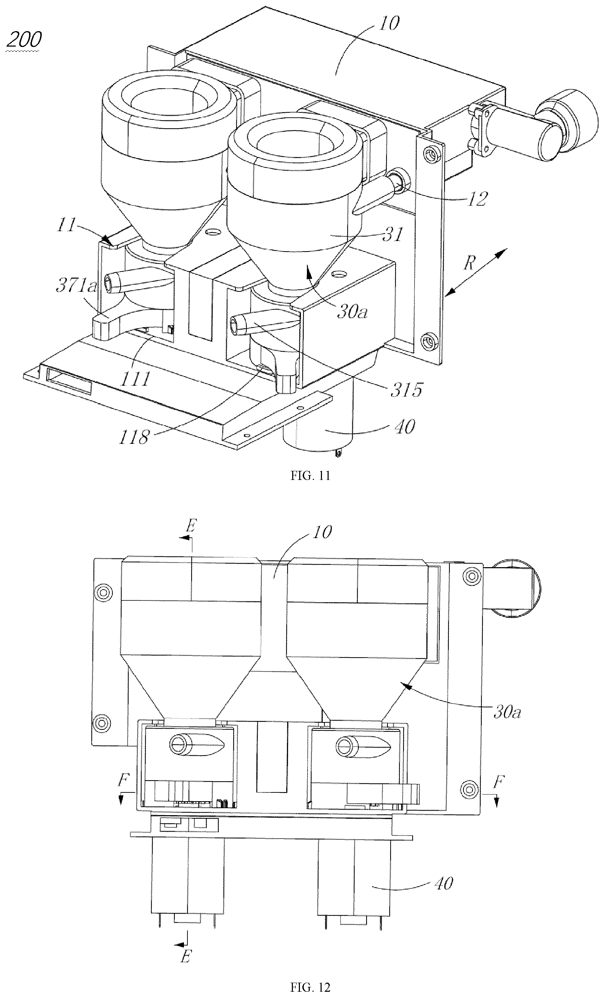

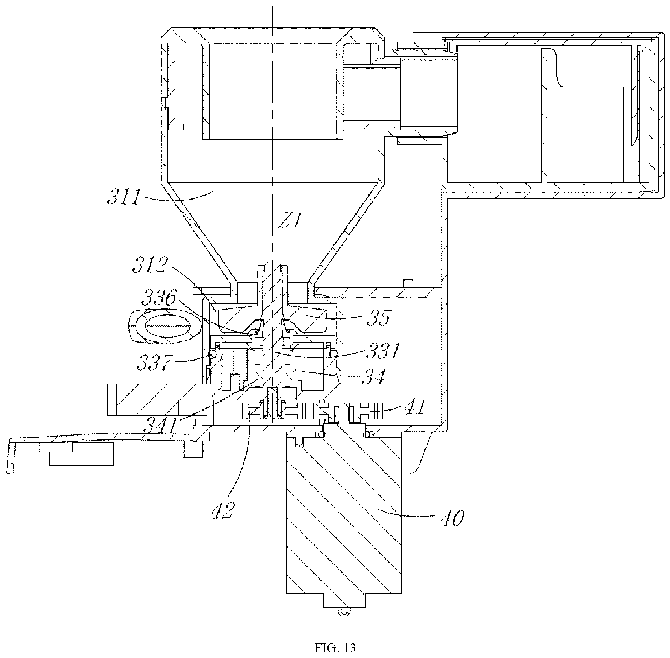

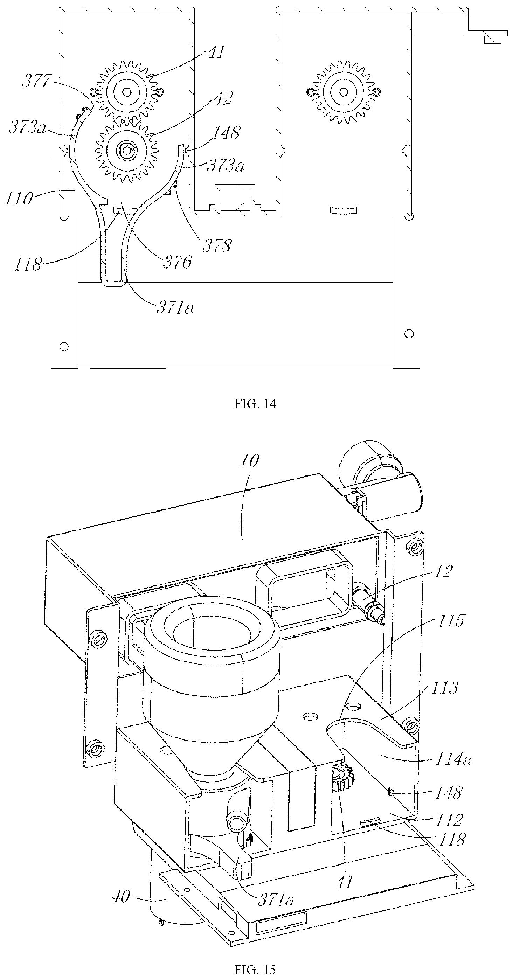

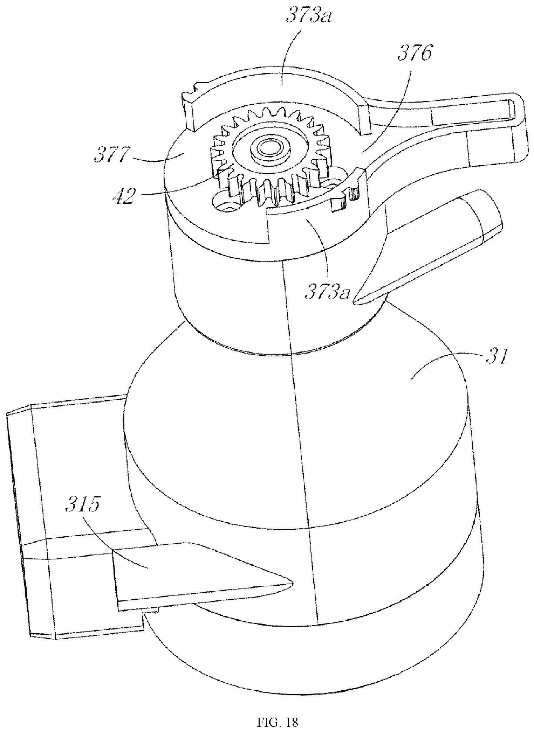

Referring to FIG. 11 to FIG. 18, in another preferred embodiment, the mixing device 200 includes a supporting base 10, a mixer assembly 30a installed on the supporting base 10, and a motor 40 disposed on the supporting base 10. The supporting base 10 has an installation part 11, and the mixer assembly 30a is connected to the installation part 11. The mixer assembly 30a includes a mixing barrel 31 and a stirring blade 35 located inside the mixing barrel 31. The motor 40 is used for driving the stirring blade 35 to rotate around a first rotation axis Z1, to stir a mixture in the mixing barrel 31. A quantity of the mixer assembly 30a may be one, two or even more. Based on difference powders to be mixed, two or even more mixer assembly 30a are provided.

The mixing device 200 also includes a transmission mechanism disposed between the motor 40 and the stirring blade 35. The transmission mechanism includes a first transmission member 41 and a second transmission member 42. The first transmission member 41 is disposed on the installation part 11, and is connected to the motor 40 in a transmission manner, and the second transmission member 42 is connected to the stirring blade 35 in a transmission manner. The mixer assembly 30a is detachably connected to the installation part 11. The second transmission member 42 and the mixer assembly 30a are connected to or separated from the installation part 11 as an integral unit, so that it is very convenient for a user to disassemble and assemble.

Preferably, the mixer assembly 30a is detachably connected to the installation part 11 in a first direction, and a liquid inlet pipeline 12 is connected to the supporting base 10. The liquid inlet pipeline 12 communicates with the mixing barrel 31 in the first direction, so that connection or disconnection of a water passage is achieved when the mixer assembly 30a is installed or disassembled.

An axis of motor 40 is parallel to the first rotation axis Z1 of the stirring blade 35, and the axis of the motor 40 is arranged side by side with the rotation axis Z1 of the stirring blade 35 in the first direction. That is, the rotation axis Z1 of the stirring blade 35 is arranged side by side with the axis of the motor 40 in a front to rear direction, and the first transmission member 41 and the second transmission member 42 are arranged side by side. The first transmission member 41 and the second transmission member 42 are constructed as gears arranged side by side in the front to rear direction, so that engagement and disengagement operations are more effortless, and thus it is convenient for the disassembly and the installation of the mixer component 30.

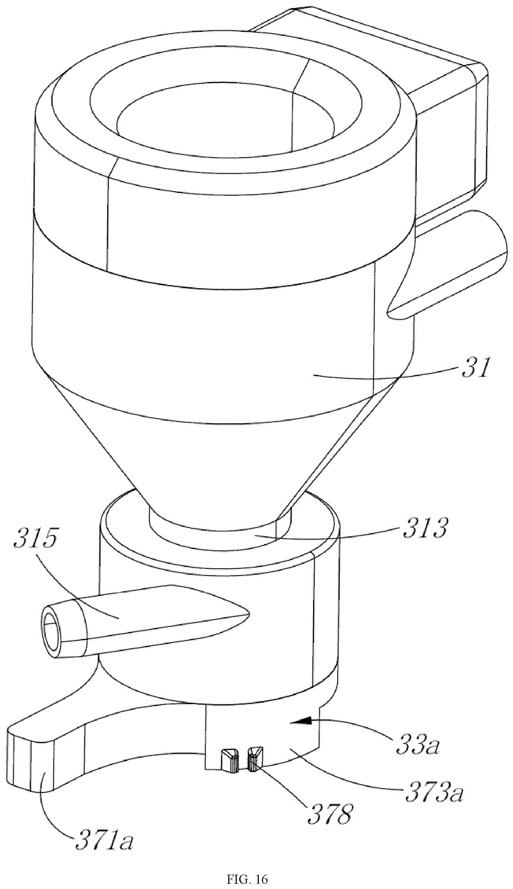

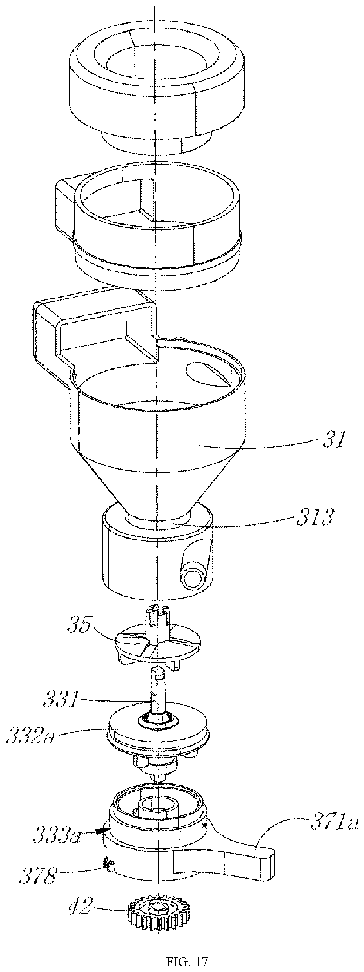

Referring to FIG. 16 and FIG. 17, the mixer assembly 30a also includes a coupling part 33a detachably connected to a bottom of the mixing barrel 31. The coupling part 33a includes a transmission shaft 331 which connects the second transmission member 42 and the stirring blade 35. The stirring blade 35 is disposed on a side of the coupling part 33a in an axial direction, and the second transmission member 42 is disposed on another side of the coupling part 33a in the axial direction. The coupling part 33a may include an upper cover 332a and a lower cover 333a which are assembled together by screws. A supporting space 34 is defined between the upper cover 332a and the lower cover 333a, and a supporting part 341, such as a bearing, a shaft sleeve, and the like may be mounted in the supporting space 34. A sealing ring 336 is disposed between the transmission shaft 331 and the upper cover 332a, to prevent a liquid inside the mixing barrel 31 from leaking through a gap between the transmission shaft 331 and the upper cover 332a. A portion of the lower cover 333a protrudes upwards, and extends into interior of the mixing barrel 31 with the upper cover 332a. A sealing loop 337 is disposed between the lower cover 333a and the interior of the mixing barrel 31, to prevent the liquid inside the mixing barrel 31 from leaking through a gap between the mixing barrel 31 and the lower cover 333a.

Preferably, the coupling part 33a is rotated relative to the mixing barrel 31, to limit or allow the mixer assembly 30a to be separated from the installation part 11. By rotating the coupling part 33a, the mixer assembly 30a is locked with or unlocked from the installation part 11, to ensure a reliable use of the mixing device 200. Moreover, it is not necessary to provide an additional locking structure, the locking is achieved by the mixer assembly 30a itself, so that the structure is simpler. Among them, the coupling part 33 is constructed as a locking part, and by the rotation of the locking part relative to the mixing barrel 31, the locking part abuts against or contacts with the installation part 11 in the first direction. The locking part may be one of the upper cover 332a or the lower cover 333a, or other parts that are connected to the coupling part 33a, which may be locked and unlocked by abutting against or being separated from the installation part 11 in the first direction. Therefore, the structure is simple, and it is easy to manufacture.

Certainly, the locking part may also be a part independent of the coupling part 33a. The locking part is movably connected to the mixing barrel 31, and is fixed relative to the mixing barrel 31 in the first direction. The locking part is capable of switching between a locking state and an unlocking state relative to the installation part 11. In the locking state, the installation part 11 limits the locking part from moving in the first direction; and in the unlocking state, the installation part 11 releases the locking part, and the locking part is allowed to move in the first direction. Among them, the locking part includes a gripping part 371a, and the installation part 11 includes an accommodating cavity 110 for receiving the mixer assembly 30a. In the first direction, the installation part 11 includes an inner side where the accommodating cavity 110 is disposed and an opposite outer side, the gripping part 371a is located at the outer side, and the gripping part 371a is capable of operably driving the locking part to rotate between the locking state and the unlocking state. In the present embodiment, the inner side is a rear side, and the outer side is the front side.

Preferably, the first rotation axis Z1 is disposed in a vertical direction and is perpendicular to the first direction. The rotation axis of the locking part is coaxial with the first rotation axis Z1, facilitating the assembly and the positioning of the locking part and the mixing barrel 31. The mixing barrel 31 includes a feeding chamber 311 and a mixing chamber 312 communicating with each other in the vertical direction, the stirring blade 35 is located inside the mixing chamber 312, and the locking part includes a connecting body being concentrically arranged with the stirring blade 35. The connecting body is a main body portion of the lower cover 333a. The gripping part 371a extends outwards from an outer periphery of the connecting body, and the connecting body is disposed below the mixing chamber 312. A rotation axis of the connecting body is concentric with the first rotation axis Z1 of the stirring blade 35, which facilitates the positioning and connection of the connecting body.

The installation part 11 includes a top plate 113, a bottom plate 112, and a side plate 114. The top plate 113 and the bottom plate 112 are disposed opposite to each other in the vertical direction, and the side plates 114 connect the top plate 113 and the bottom plate 112. The top plate 113, and the bottom plate 112, and the side plates 114 define an accommodating cavity 110 together. The side plate 114 includes a left side plate and a right side plate. The accommodating cavity 110 has an installation opening 111, and the top plate 113 is provided with a placing groove 115 communicating with the installation opening 111. The mixer assembly 30a enters the placing groove 115 from the installation opening 111 in the first direction, and a portion of the mixer assembly 30a is located in the accommodating cavity 110 and is limited by the top plate 113 in the direction of the first rotation axis Z1. Specifically, the mixing barrel 31 includes a contraction portion 313, and the contraction portion 313 is disposed at a joint between the feeding chamber 311 and the mixing chamber 312. The contraction portion 313 enters the placing groove 115, and the top wall of the mixing chamber 312 is limited by the top plate 113. By using structure of the mixing barrel 31 itself to limit the mixing barrel 31 in the vertical direction, the installation of the mixer assembly 30a is more reliable.

Furthermore, the connecting body includes two arc-shaped walls 373a that are arranged concentrically with the first rotation axis Z1 of the stirring blade 35. The two arc-shaped walls 373a are arranged at intervals in a circumferential direction, and a first notch 376 and a second notch 377 are formed between the two arc-shaped walls 373a at intervals in the circumferential direction. The installation part 11 is provided with a stopper block 118. In the locking state, one of the arc-shaped walls 373a abuts against the stopper block 118. In the unlocking state, the first notch 376 corresponds to a position of the stopper block 118, and the second notch 377 corresponds toa position of the first transmission member 41. The first notch 376 is used for cooperating with the stopper block 118 to unlock the connecting body, and the second notch 377 is used for avoiding an interference between the two arc-shaped walls 373a and the first transmission member 41 when installing or disassembling the mixer assembly 30. An opening size of the second notch 377 is greater than that of the first notch 376, which facilitates engagement between the first transmission member 41 and the second transmission member 42, and the arc-shaped wall 373a will not interfere the first transmission member 41 when the connecting body is rotated. The connecting body is unlocked with the installation part 11 by utilizing shapes of the two notches and the two arc-shaped walls through rotating the connecting body, so that the structure is simple, and it is convenient for operating. Among them, the gripping part 371a extends forwards radially from a position corresponding to the first notch 376, so that it is convenient for gripping when unlocking, and thus the operation is effortless.

In addition, the two arc-shaped walls 373a are respectively provided with clamping jaws 378, and the two side plates 14a are respectively provided with clamping blocks 148 fitted with the clamping jaws 378. The clamping claws 378 on the two arc-shaped walls 373a are respectively clamped or separated from the corresponding clamping blocks 148 in opposite directions. By provided the clamping claws 378 and clamping blocks 148 fitted with each other, the installation of the mixer assembly 30a is more reliable, and meanwhile tactile feedback is provided during locking and unlocking operations, making it is convenient for a user to perceive.

In the following, the disassembly and installation processes of the mixer assembly 30a will be described in details. In the FIG. 11, the mixer assembly 30a at a left side is in the locking state. When it is necessary to clean the mixer assembly 30a, a force is applied to the gripping part 371a in an unlocking direction, to make the gripping part 371a drive the locking part (the coupling part 33a) to rotate relative to the installation part 11, the clamping jaws 378 are separated from the clamping block 148, until the first notch 376 corresponds to the position of the stopper block 118, and then the locking between the locking part and the installation part 11 in the first direction is released. In the FIG. 11, the mixer assembly 30a at a right side is in an unlocking state. Since the locking part is rotated relative to the mixing barrel 31, during an unlocking process, a position of the mixing barrel 31 is not changed relative to the supporting base 10. After unlocking, the gripping part 371a is operated to move outwards in the first direction. The gripping part 371a will drive the locking part (the coupling part 33a), the mixing barrel 31, and the second transmission member 42 to be separated from the supporting base 10 together. If it is required to continue to separate the locking part and the mixing barrel 31, it may be implemented by simply moving the locking part relative to the mixing barrel 31 in the first rotation axis Z1 direction of the stirring blade 35. If it is required to clean the stirring blade 35 separately, it can be implemented by removing the stirring blade 35 from the transmission shaft 331, and then they are installed to their original positions one by one after cleaning.

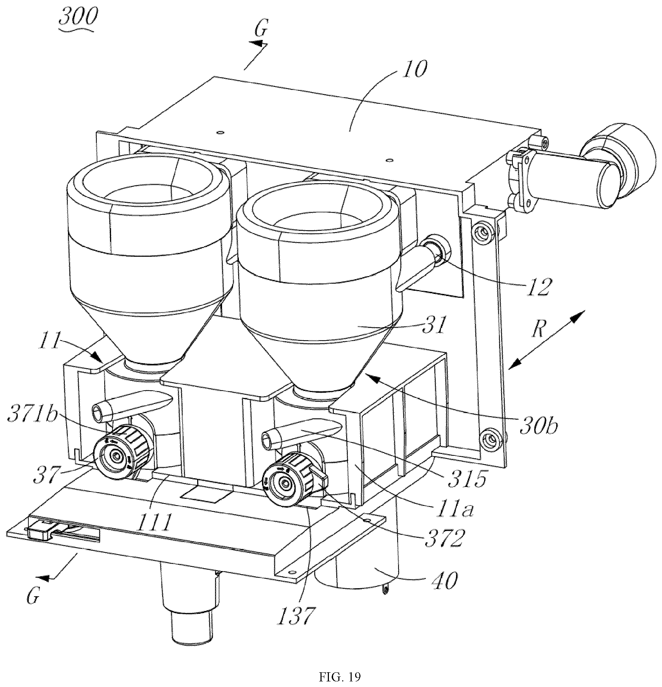

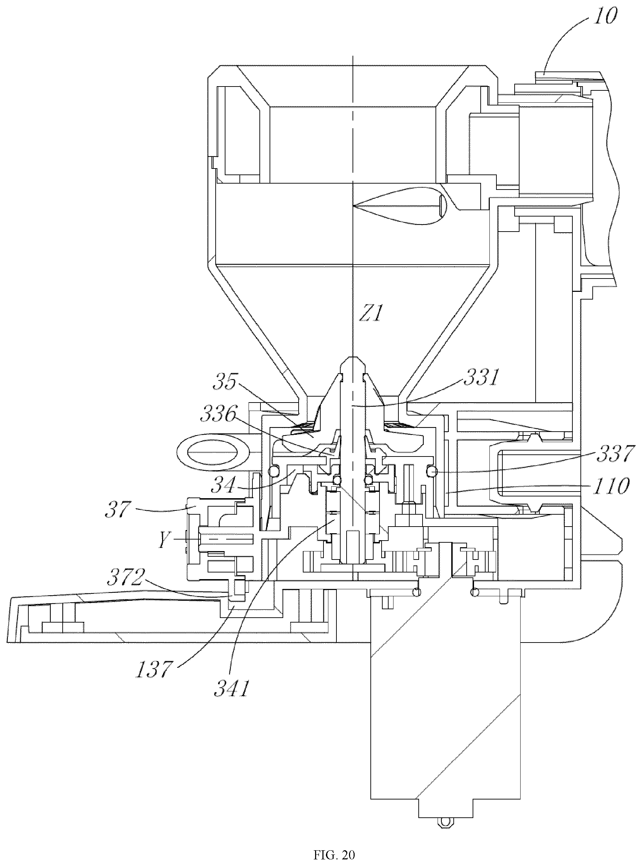

Referring to FIG. 19 to FIG. 22, in a yet preferred implementation, the mixing device 300 includes a supporting base 10, a mixer assembly 30b installed on the supporting base 10, and a motor 40 disposed on the supporting base 10. The supporting base 10 has an installation part 11, and the mixer assembly 30b is connected to the installation part 11. The mixer assembly 30b includes a mixing barrel 31 and a stirring blade 35 located inside the mixing barrel 31. The motor 40 is used for driving the stirring blade 35 to rotate around a first rotation axis Z1, and thereby stirring a mixture inside the mixing barrel 31.

Among them, the mixing device 300 also includes a transmission mechanism disposed between the motor 40 and the stirring blade 35. The transmission mechanism includes a first transmission member 41 and a second transmission member 42. The first transmission member 41 is disposed on the installation part 11, and is connected to the motor 40 in a transmission manner. The second transmission member 42 is connected to the stirring blade 35 in a transmission manner. A liquid inlet pipeline 12 is connected to the supporting base 10, and the liquid inlet pipeline 12 communicates with the mixing barrel 31 in a first direction. The mixer assembly 30b is detachably connected to the installation part 11. In the first direction, the second transmission member 42 and the mixer assembly 30b are connected to or separated from the installation part 11 as an integral unit, so that it is very convenient for a user to disassemble and assemble.

Specifically, an axis of motor 40 is parallel to the first rotation axis Z1 of the stirring blade 35. The axis of the motor 40 and the first rotation axis Z1 of the stirring blade 35 are arranged side by side in the first direction. That is, the first rotation axis Z1 of the stirring blade 35 is arranged side by side with the axis of the motor 40 in a front to rear direction, or it may be considered that the first transmission member 41 and the second transmission member 42 are arranged side by side. The first transmission member 41 and the second transmission member 42 are both constructed as gears arranged side by side in the front to rear direction, so that engagement and disengagement operations are more effortless, and thus it is convenient for the disassembly and the installation of the mixer assembly 30b.

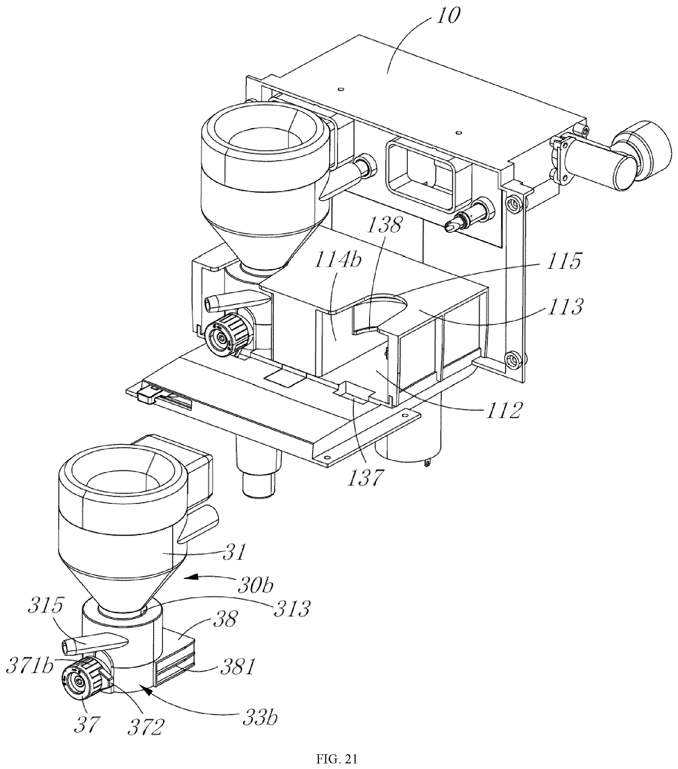

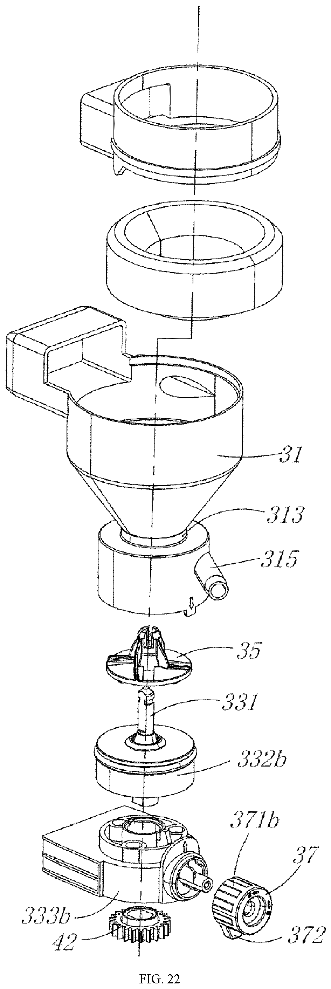

Referring to FIG. 21 and FIG. 22, the mixer assembly 30b also includes a coupling part 33b detachably connected to a bottom of the mixing barrel 31. The coupling part 33b includes a transmission shaft 331 which connects the second transmission member 42 and the stirring blade 35. The stirring blade 35 is disposed on a side of the coupling part 33b in an axial direction, and the second transmission member 42 is disposed on another side of the coupling part 33b in the axial direction. The coupling part 33b may include an upper cover 332b and a lower cover 333b which are assembled together by screws. A supporting space 34 is defined between the upper cover 332b and the lower cover 333b, and a supporting part 341 such as a bearing, a shaft sleeve, and the like may be disposed in the supporting space 34. A sealing ring 336 is disposed between the transmission shaft 331 and the upper cover 332b, to prevent a liquid inside the mixing barrel 31 from leaking through a gap between the transmission shaft 331 and the upper cover 332b. A portion of the lower cover 333a protrudes upwards, and extends into the upper cover 332b. The upper cover 332b extends into interior of the mixing barrel 31, and a bottom edge of the mixing barrel 31 is capable of abutting against the lower cover 333b. A sealing loop 337 is disposed between the upper cover 332b and the interior of the mixing barrel 31, to prevent the liquid inside the mixing barrel 31 from leaking through a gap between the mixing barrel 31 and the upper cover 332b.

In a preferred implementation, the coupling part 33b is fixed relative to the mixing barrel 31. The coupling part 33b is connected to the locking part, and it may be considered that the locking part is a part independent of the coupling part 33b. The locking part is movably connected to the mixing barrel 31 through the coupling part 33b, and the locking part is indirectly connected to the barrel 31. The locking part is fixed relative to the mixing barrel 31 in the first direction. The locking part is capable of switching between a locking state and an unlocking state relative to the installation part 11. In the locking state, the installation part 11 limits movement of the locking part in the first direction; and in the unlocking state, the installation part 11 releases the locking part, and the locking part is allowed to move in the first direction.

The locking part includes a gripping part 371b, the installation part 11 includes an accommodating cavity 110 for receiving the mixer assembly 30b. In the first direction, the installation part 11 includes an inner side where the accommodating cavity 110 is disposed and an opposite outer side, and the gripping part 371b is located at the outer side. The gripping part 371b is capable of operably driving the locking part to rotate between the locking state and the unlocking state. In the present embodiment, the inner side is a rear side, and the outer side is a front side.

Preferably, the first rotation axis Z1 is disposed in a vertical direction and is perpendicular to the first direction. A second rotation axis Y of the locking part is parallel to the first direction, so that it facilitates the fitting between the locking part and the installation part 11. The mixing barrel 31 includes a feeding chamber 311 and a mixing chamber 312 communicating with each other in the vertical direction, and the stirring blade 35 is located inside the mixing chamber 312. The installation part 11 includes a top plate 113, a bottom plate 112, and a side plate 114. The top plate 113 and the bottom plate 112 are disposed opposite to each other in the vertical direction, and the side plate 114 connects the top plate 113 and the bottom plate 112. The top plate 113, the bottom plate 112, and the side plate 114 define an accommodating cavity 110 together. The side plates 114 include a left side plate and a right side plate. The accommodating cavity 110 has an installation opening 111, and a placing groove 115 is disposed on the top plate 113 and communicates with the installation opening 111. The mixer assembly 30b enters the placing groove 115 from the installation opening 111 in the first direction. A portion of the mixer assembly 30b is located in the accommodating cavity 110, and is limited by the top plate 113 in the direction of the first rotation axis Z1. Specifically, the mixing barrel 31 includes a contraction portion 313, and the contraction portion 313 is disposed at a joint between the feeding chamber 311 and the mixing chamber 312. The contraction portion 313 enters the placing groove 115, and a top wall of the mixing chamber 312 is limited by the top plate 113. By using a structure of the mixing barrel 31 itself to limit the mixing barrel 31 in the vertical direction, the installation of the mixer assembly 30b is more reliable.

Furthermore, a guide block 38 is disposed on a rear side of the coupling part 33b, and rib plates 381 extending in the first direction are disposed on left and right sides of the guide block 38, respectively. The accommodating cavity 110 is provided with a limiting rib 138, and the guide block 38 guides the mixer assembly 30b to be assembled into from the installation opening 111 through the rib plates 381 on the two sides. The guide block 38 is located below the limiting rib 138, to further achieve a limitation of the position of the mixer assembly 30b in the vertical direction through the limiting rib 138.

The locking part is connected to a front side of the coupling part 33b. The locking part is constructed as a knob 37, and a circumferential surface of the knob 37 is constructed as the gripping part 371b. The locking part also includes a locking block 372 protruding from the gripping part 371b. The installation part 11 is provided with a locking groove 137, and the gripping part 371b moves relative to the mixing barrel 31 to allow the locking block 372 to extend into or be separated from the locking groove 137. In the present embodiment, the locking part rotates around an axis parallel to the first direction, and the locking block 372 may protrude radially from the locking block 37.

In the following, disassembly and installation processes of the mixer assembly 30b will be described in details. In FIG. 19, the mixer assembly 30b at a left side is in a locking state. When the mixer assembly 30b is necessary to clean, the knob 37 is rotated in an unlocking direction indicated on the knob 37, to make the knob 37 drive the locking block 372 to be separated from the locking groove 137 on the installation part 11, so that the locking in the first direction between the mixer assembly 30b and the installation part 11 is released. During the unlocking process, it is only necessary to rotate the knob 37. In FIG. 19, the mixer assembly 30b at a right side is in an unlocking state. After unlocking, by gripping the knob 37 and making it move outwards, the knob 37 will drive the coupling part 33b, the mixing barrel 31, and the second transmission member 42 to be separated from the supporting base 10 together. If it is necessary to continue to separate the coupling part 33b and mixing barrel 31, it is only necessary to enable the coupling part 33b to move relative to the mixing barrel 31 in the first rotation axis Z1 direction of the stirring blade 35. If it is necessary to clean the stirring blade 35, the stirring blade 35 is removed from the transmission shaft 331, and after cleaning, they are installed to their original position one by one.

In the above embodiment, at least a portion of a cavity surface of the feeding chamber 311 is a circular arc surface. Preferably, a delivering direction of the liquid inlet pipeline 12 is tangential to the circular arc surface, so that the delivered liquid (for example water) is capable of flowing in a circumference direction of the feeding chamber 311 to pass through more of the cavity surface. That is, the outflowed water rotates along the wall of the mixing barrel 31 may wash away the powders adhering to the inner wall, so that the powders fellow into the feeding chamber 311 are prevented from adhering to the cavity surface of the feeding chamber 311. Moreover, it may cause an eddy current to effectively dissolve the powders in the liquid (for example water). In addition, the mixing barrel 31 is provided with an output pipeline 315 that communicates with the mixing chamber 312. Preferably, a delivering direction of the output pipeline 315 is tangential to an outer peripheral surface of the stirring blade 35, so that the mixed liquid to be flung out under an action of the stirring blade 35, which facilitates discharging a liquid.

In the present invention, by the second transmission member and the mixer assembly are connected or separated from the installation part as an integral unit, a user may disassemble the mixer assembly for subsequent cleaning by themselves. Disassembly and assembly are merely required to be separated or connected in corresponding directions, so that it is simple and convenient for a user to operate, and it is labor-saving, thereby it is not necessary to disassemble and maintain by a professional, and thus a maintenance cost of the mixing device for the user is reduced. By disassembling the entire mixer assembly from the supporting base, a more thorough cleaning may be performed without the requirement for removing the motor 40 together, so that it is not necessary to provide a corresponding relief structure for the motor 40, and thus a space utilization of the machine is increased, and the disassembly operation by the user are facilitated.

## Claims

1. A mixing device (100), comprising:
a supporting base (10) having an installation part (11);
a mixer assembly (30) detachably connected to the installation part (11), and comprising a mixing barrel (31) and a stirring blade (35) located inside the mixing barrel (31);
a motor (40) disposed on the supporting base (10), and configured to drive the stirring blade (35) to rotate around a first rotation axis (Z1), wherein
in a direction perpendicular to the first rotation axis (Z1), an axis of the motor (40) is misaligned with the first rotation axis (Z1); and the mixing device (100) further comprises a transmission mechanism disposed between the motor (40) and the stirring blade (35), the transmission mechanism is configured to connect the motor (40) and the stirring blade (35), the transmission mechanism comprises a first transmission member (41) and a second transmission member (42); and the first transmission member (41) is disposed on the installation part (11), and is connected to the motor (40) in a transmission manner, and the second transmission member (42) is connected to the stirring blade (35) in a transmission manner; and
the second transmission member (42) and the mixer assembly (30) are connected to or separated from the installation part (11) as an integral unit, wherein
the mixer assembly (30) further comprises a locking part connected to the mixing barrel (31), and the mixer assembly (30) is connected to or separated from the installation part (11) in a first direction; the locking part is capable of moving relative to the mixing barrel (31), and is fixed relative to the mixing barrel (31) in the first direction; the locking part is capable of switching between a locking state and an unlocking state relative to the installation part (11), and in the locking state, the installation part (11) limits the locking part from moving in the first direction; and in the unlocking state, the installation part (11) releases the locking part, and the locking part is allowed to move in the first direction; and
the installation part (11) comprises a top plate (113), a bottom plate (112), and a side plate (114), the top plate (113) and the bottom plate (112) are disposed opposite each other in a vertical direction, and the side plate (114) connects the top plate (113) and the bottom plate (112); the top plate (113), the bottom plate (112), and the side plate (114) define an accommodating cavity (110) together, the accommodating cavity (110) has an installation opening (111), the top plate (113) is provided a placing groove (115) communicating with the installation opening (111), and the mixer assembly (30) enters the placing groove (115) in the first direction from the installation opening (111); and a portion of the mixer assembly (30) is located in the accommodating cavity (110), and is limited by the top plate (113) in the first rotational axis direction, **characterized in that**,
the mixing barrel (31) comprises a feeding chamber (311) and a mixing chamber (312) communicating with each other in a vertical direction, the stirring blade (35) is located inside the mixing chamber (312), the bottom of the mixing chamber (312) radially extends outwards to form a skirt edge (314), and the skirt edge (314) is limited by the top plate (113); or
the mixing barrel (31) comprises a feeding chamber (311) and a mixing chamber (312) communicating with each other in a vertical direction, the stirring blade (35) is located inside the mixing chamber (312), the mixing barrel (31) comprises a contraction portion (313), the contraction portion (313) is disposed at a joint between the feeding chamber (311) and the mixing chamber (312), the contraction portion (313) enters the placing groove (115), and a top wall of the mixing chamber (312) is limited by the top plate (113).

2. The mixing device (100) according to claim 1, wherein the mixer assembly (30) further comprises a coupling part (33a) connected to a bottom of the mixing barrel (31), the coupling part (33a) comprises a transmission shaft (331), the transmission shaft (331) connects the second transmission member (42) and the stirring blade (35), and in an axial direction, the stirring blade (35) is disposed on a side of the coupling part (33a), and the second transmission member (42) is disposed on another side of the coupling part (33a).

3. The mixing device (100) according to claim 2, wherein a discharging outlet (346) is disposed on a side of the coupling part (33a) corresponding to the second transmission member (42), the coupling part (33a) defines a supporting space (34), and a discharging valve (36) is disposed in the supporting space (34); when the mixer assembly (30) is connected to the installation part (11), the discharging valve (36) opens the discharging outlet (346); and when the mixer assembly (30) is separated from the installation part (11), the discharging valve (36) closes the discharging outlet (346).

4. The mixing device (100) according to claim 3, wherein the discharging valve (36) comprises a valve body (361) and an elastic element (362) acting on the valve body (361), and the installation part (11) is provided with a butt joint block (116); and the butt joint block (116) is configured to abut against the valve body (361) to make the valve body (361) overcome an action of the elastic element (362) to open the discharging outlet (346).

5. The mixing device (100) according to any one of claims 2 to 4, wherein the coupling part (33a) is capable of rotating relative to the mixing barrel (31), to limit or allow the mixer assembly (30) to be separated from the installation part (11).

6. The mixing device (100) according to any one of claims 1 to 5, wherein the axis of the motor (40) is parallel to the first rotation axis (Z1), the mixer assembly (30) is connected to or separated from the installation part (11) in the first direction, and the first direction is perpendicular to the first rotation axis (Z1); and in the first direction, the axis of the motor (40) is disposed side by side with the first rotation axis (Z1), or in a direction perpendicular to the first direction, the axis of the motor (40) is disposed side by side with the first rotation axis (Z1).

7. The mixing device (100) according to claim 1, wherein the locking part comprises a gripping part (371b), and the installation part (11) comprises the accommodating cavity (110) for receiving the mixer assembly (30); in the first direction, the installation part (11) comprises an inner side where the accommodating cavity (110) is disposed and an opposite outer side, and the gripping part (371b) is located on the outer side; and the gripping part (371b) is capable of operably driving the locking part to rotate between the locking state and the unlocking state.

8. The mixing device (100) according to claim 7, wherein the first rotation axis (Z1) is disposed in a vertical direction, and the first direction is perpendicular to the first rotation axis (Z1); a rotation axis of the locking part is coaxial with the first rotation axis (Z1), or the rotation axis of the locking part is parallel to the first direction; and a liquid inlet pipeline (12) is connected to the supporting base (10), and the liquid inlet pipeline (12) communicates with the mixing barrel (31) in the first direction.

9. The mixing device (100) according to claim 7 or claim 8, wherein the locking part further comprises a locking block (372) protruding from the gripping part (371b), the installation part (11) is provided with a locking groove (137), the gripping part (371b) is capable of moving relative to the mixing barrel (31), to make the locking block (372) engage into or disengage from the locking groove (137).

10. The mixing device (100) according to claim 7 or claim 8, wherein the locking part comprises a connecting body that is concentrically arranged with the stirring blade (35), the gripping part (371b) extends outwards from an outer periphery of the connecting body, and the connecting body is disposed below the mixing chamber (312).

11. The mixing device (100) according to claim 10, wherein the connecting body comprises two arc-shaped walls (373) disposed opposite to each other and two straight walls (375), and the two straight walls (375) are disposed opposite to each other and are separately connected to the two arc-shaped walls (373); the two arc-shaped walls (373) are concentrically arranged with the stirring blade (35), and a distance between the two straight walls (375) is substantially the same as a width of the installation opening (111); the installation part (11) is provided with a blocking wall (117), and in the locking state, one of the two straight walls (375) abuts against the blocking wall (117); and in the unlocked state, the two straight walls (375) are respectively flush with the installation opening (111).

## Patentansprüche

1. Eine Mischvorrichtung (100), die Folgendes beinhaltet:
eine Stützbasis (10) mit einem Installationsteil (11);
eine Mischeranordnung (30), die lösbar mit dem Installationsteil (11) verbunden ist und
einen Mischzylinder (31) und ein Rührblatt (35) beinhaltet, das sich innerhalb des Mischzylinders (31) befindet;
einen Motor (40), der auf der Stützbasis (10) angeordnet ist und konfiguriert ist, um das Rührblatt (35) anzutreiben, um sich um eine erste Drehachse (Z1) zu drehen, wobei in einer Richtung senkrecht zur ersten Drehachse (Z1) eine Achse des Motors (40) auf die erste Drehachse (Z1) fehlausgerichtet ist; und die Mischvorrichtung (100) ferner einen Übertragungsmechanismus beinhaltet, der zwischen dem Motor (40) und dem Rührblatt (35) angeordnet ist, wobei der Übertragungsmechanismus konfiguriert ist, um den Motor (40) und das Rührblatt (35) zu verbinden, wobei der Übertragungsmechanismus ein erstes Übertragungselement (41) und ein zweites Übertragungselement (42) beinhaltet; und das erste Übertragungselement (41) auf dem Installationsteil (11) angeordnet ist und auf eine Übertragungsweise mit dem Motor (40) verbunden ist und das zweite Übertragungselement (42) auf eine Übertragungsweise mit dem Rührblatt (35) verbunden ist; und
das zweite Übertragungselement (42) und die Mischeranordnung (30) als eine integrale Einheit mit dem Installationsteil (11) verbunden oder davon getrennt sind, wobei die Mischeranordnung (30) ferner ein Verriegelungsteil beinhaltet, das mit dem Mischzylinder (31) verbunden ist, und die Mischeranordnung (30) in einer ersten Richtung mit dem Installationsteil (11) verbunden oder davon getrennt ist; das Verriegelungsteil in der Lage ist, sich relativ zum Mischzylinder (31) zu bewegen, und
relativ zum Mischzylinder (31) in der ersten Richtung fixiert ist; das Verriegelungsteil in der Lage ist, zwischen einem Verriegelungszustand und einem Entriegelungszustand relativ zum Installationsteil (11) umzuschalten, und im Verriegelungszustand das Installationsteil (11) das Verriegelungsteil daran hindert, sich in der ersten Richtung zu bewegen; und im Entriegelungszustand das Installationsteil (11) das Verriegelungsteil freigibt und es dem Verriegelungsteil erlaubt ist, sich in der ersten Richtung zu bewegen; und
das Installationsteil (11) eine obere Platte (113), eine untere Platte (112) und eine Seitenplatte (114) beinhaltet, wobei die obere Platte (113) und die untere Platte (112) in einer vertikalen Richtung einander gegenüberliegend angeordnet sind und die Seitenplatte (114) die obere Platte (113) und die untere Platte (112) verbindet; die obere Platte (113), die untere Platte (112) und die Seitenplatte (114) zusammen einen Aufnahmehohlraum (110) definieren, der Aufnahmehohlraum (110) eine Installationsöffnung (111) aufweist, die obere Platte (113) mit einer Platzierungsnut (115) versehen ist, die mit der Installationsöffnung (111) in Verbindung steht, und die Mischeranordnung (30) von der Installationsöffnung (111) in die Platzierungsnut (115) in der ersten Richtung eintritt; und sich ein Abschnitt der Mischeranordnung (30) im Aufnahmehohlraum (110) befindet und durch die obere Platte (113) in der ersten Drehachsenrichtung begrenzt ist, **dadurch gekennzeichnet, dass** der Mischzylinder (31) eine Zuführkammer (311) und eine Mischkammer (312) beinhaltet, die miteinander in einer vertikalen Richtung in Verbindung stehen, sich das Rührblatt (35) innerhalb der Mischkammer (312) befindet, sich der Boden der Mischkammer (312) radial nach außen erstreckt, um eine Schürzenkante (314) zu bilden, und die Schürzenkante (314) durch die obere Platte (113) begrenzt ist; oder
der Mischzylinder (31) eine Zuführkammer (311) und eine Mischkammer (312) beinhaltet, die miteinander in einer vertikalen Richtung in Verbindung stehen, sich das Rührblatt (35) innerhalb der Mischkammer (312) befindet, der Mischzylinder (31) einen Kontraktionsabschnitt (313) beinhaltet, der Kontraktionsabschnitt (313) an einer Verbindungsstelle zwischen der Zuführkammer (311) und der Mischkammer (312) angeordnet ist, der Kontraktionsabschnitt (313) in die Platzierungsnut (115) eintritt und eine obere Wand der Mischkammer (312) durch die obere Platte (113) begrenzt ist.

2. Mischvorrichtung (100) gemäß Anspruch 1, wobei die Mischeranordnung (30) ferner ein Kopplungsteil (33a) beinhaltet, das mit einem Boden des Mischzylinders (31) verbunden ist, das Kopplungsteil (33a) eine Übertragungswelle (331) beinhaltet, die Übertragungswelle (331) das zweite Übertragungselement (42) und das Rührblatt (35) verbindet und das Rührblatt (35) in einer axialen Richtung auf einer Seite des Kopplungsteils (33a) angeordnet ist und das zweite Übertragungselement (42) auf einer anderen Seite des Kopplungsteils (33a) angeordnet ist.

3. Mischvorrichtung (100) gemäß Anspruch 2, wobei ein Abgabeauslass (346) auf einer Seite des Kopplungsteils (33a) angeordnet ist, die dem zweiten Übertragungselement (42) entspricht, das Kopplungsteil (33a) einen Stützraum (34) definiert und ein Abgabeventil (36) im Stützraum (34) angeordnet ist; wenn die Mischeranordnung (30) mit dem Installationsteil (11) verbunden ist, das Abgabeventil (36) den Abgabeauslass (346) öffnet; und wenn die Mischeranordnung (30) vom Installationsteil (11) getrennt ist, das Abgabeventil (36) den Abgabeauslass (346) schließt.

4. Mischvorrichtung (100) gemäß Anspruch 3, wobei das Abgabeventil (36) einen Ventilkörper (361) und ein elastisches Element (362) beinhaltet, das auf den Ventilkörper (361) wirkt, und das Installationsteil (11) mit einem Stumpfstoßblock (116) versehen ist; und der Stumpfstoßblock (116) konfiguriert ist, um an den Ventilkörper (361) anzustoßen, um den Ventilkörper (361) eine Wirkung des elastischen Elements (362) überwinden zu lassen, um den Abgabeauslass (346) zu öffnen.

5. Mischvorrichtung (100) gemäß einem der Ansprüche 2 bis 4, wobei das Kopplungsteil (33a) in der Lage ist, sich relativ zum Mischzylinder (31) zu drehen, um die Mischeranordnung (30) zu begrenzen oder zu erlauben, dass sie vom Installationsteil (11) getrennt wird.

6. Mischvorrichtung (100) gemäß einem der Ansprüche 1 bis 5, wobei die Achse des Motors (40) parallel zur ersten Drehachse (Z1) ist, die Mischeranordnung (30) in der ersten Richtung mit dem Installationsteil (11) verbunden oder davon getrennt ist und die erste Richtung senkrecht zur ersten Drehachse (Z1) ist; und in der ersten Richtung die Achse des Motors (40) Seite an Seite mit der ersten Drehachse (Z1) angeordnet ist oder in einer Richtung senkrecht zur ersten Richtung die Achse des Motors (40) Seite an Seite mit der ersten Drehachse (Z1) angeordnet ist.

7. Mischvorrichtung (100) gemäß Anspruch 1, wobei das Verriegelungsteil ein Greifteil (371b) beinhaltet und das Installationsteil (11) den Aufnahmehohlraum (110) zum Aufnehmen der Mischeranordnung (30) beinhaltet; in der ersten Richtung das Installationsteil (11) eine Innenseite, wo der Aufnahmehohlraum (110) angeordnet ist, und eine gegenüberliegende Außenseite beinhaltet und sich das Greifteil (371b) auf der Außenseite befindet; und das Greifteil (371b) in der Lage ist, das Verriegelungsteil betriebsfähig anzutreiben, um sich zwischen dem Verriegelungszustand und dem Entriegelungszustand zu drehen.

8. Mischvorrichtung (100) gemäß Anspruch 7, wobei die erste Drehachse (Z1) in einer vertikalen Richtung angeordnet ist und die erste Richtung senkrecht zur ersten Drehachse (Z1) ist; eine Drehachse des Verriegelungsteils koaxial zur ersten Drehachse (Z1) ist oder die Drehachse des Verriegelungsteils parallel zur ersten Richtung ist; und eine Flüssigkeitseinlassrohrleitung (12) mit der Stützbasis (10) verbunden ist und die Flüssigkeitseinlassrohrleitung (12) mit dem Mischzylinder (31) in der ersten Richtung in Verbindung steht.

9. Mischvorrichtung (100) gemäß Anspruch 7 oder Anspruch 8, wobei das Verriegelungsteil ferner einen Verriegelungsblock (372) beinhaltet, der vom Greifteil (371b) vorsteht, das Installationsteil (11) mit einer Verriegelungsnut (137) versehen ist, das Greifteil (371b) in der Lage ist, sich relativ zum Mischzylinder (31) zu bewegen, um zu bewirken, dass der Verriegelungsblock (372) in die Verriegelungsnut (137) eingreift oder sich davon löst.

10. Mischvorrichtung (100) gemäß Anspruch 7 oder Anspruch 8, wobei das Verriegelungsteil einen Verbindungskörper beinhaltet, der konzentrisch mit dem Rührblatt (35) eingerichtet ist, sich das Greifteil (371b) von einem Außenumfang des Verbindungskörpers nach außen erstreckt und der Verbindungskörper unter der Mischkammer (312) angeordnet ist.

11. Mischvorrichtung (100) gemäß Anspruch 10, wobei der Verbindungskörper zwei bogenförmige Wände (373), die einander gegenüberliegend angeordnet sind, und zwei gerade Wände (375) beinhaltet und die zwei geraden Wände (375) einander gegenüberliegend angeordnet sind und separat mit den zwei bogenförmigen Wänden (373) verbunden sind; die zwei bogenförmigen Wände (373) konzentrisch mit dem Rührblatt (35) eingerichtet sind und ein Abstand zwischen den zwei geraden Wänden (375) im Wesentlichen gleich einer Breite der Installationsöffnung (111) ist; das Installationsteil (11) mit einer Blockierwand (117) versehen ist und im Verriegelungszustand eine der zwei geraden Wände (375) an die Blockierwand (117) anstößt; und im entriegelten Zustand die zwei geraden Wände (375) jeweils bündig mit der Installationsöffnung (111) sind.

## Revendications

1. Un dispositif de mélange (100), comprenant :
une base de support (10) ayant une partie d'installation (11) ;
un ensemble mélangeur (30) raccordé de manière amovible à la partie d'installation (11), et comprenant un cylindre de mélange (31) et une lame d'agitation (35) située à l'intérieur du cylindre de mélange (31) ;
un moteur (40) disposé sur la base de support (10), et configuré pour entraîner la lame d'agitation (35) afin qu'elle tourne autour d'un premier axe de rotation (Z1), dans lequel dans une direction perpendiculaire au premier axe de rotation (Z1), un axe du moteur (40) est désaligné avec le premier axe de rotation (Z1) ; et le dispositif de mélange (100) comprend en outre un mécanisme de transmission disposé entre le moteur (40) et la lame d'agitation (35), le mécanisme de transmission est configuré pour relier le moteur (40) et la lame d'agitation (35), le mécanisme de transmission comprend un premier élément de transmission (41) et un deuxième élément de transmission (42) ; et
le premier élément de transmission (41) est disposé sur la partie d'installation (11), et est raccordé au moteur (40) par transmission, et le deuxième élément de transmission (42) est raccordé à la lame d'agitation (35) par transmission ; et
le deuxième élément de transmission (42) et l'ensemble mélangeur (30) sont raccordés à ou séparés de la partie d'installation (11) en tant qu'une unité intégrée, dans lequel l'ensemble mélangeur (30) comprend en outre une partie de verrouillage raccordée au cylindre de mélange (31), et l'ensemble mélangeur (30) est raccordé à ou séparé de la partie d'installation (11) dans une première direction ; la partie de verrouillage est capable de se déplacer par rapport au cylindre de mélange (31), et est fixe par rapport au cylindre de mélange (31) dans la première direction ; la partie de verrouillage est capable de commuter entre un état de verrouillage et un état de déverrouillage par rapport à la partie d'installation (11), et dans l'état de verrouillage, la partie d'installation (11) limite le déplacement de la partie de verrouillage dans la première direction ; et
dans l'état de déverrouillage, la partie d'installation (11) libère la partie de verrouillage, et la partie de verrouillage est autorisée à se déplacer dans la première direction ; et
la partie d'installation (11) comprend une plaque supérieure (113), une plaque inférieure (112), et une plaque latérale (114), la plaque supérieure (113) et la plaque inférieure (112) sont disposées à l'opposé l'une de l'autre dans une direction verticale, et la plaque latérale (114) raccorde la plaque supérieure (113) et la plaque inférieure (112) ; la plaque supérieure (113), la plaque inférieure (112), et la plaque latérale (114) définissent ensemble une cavité de logement (110), la cavité de logement (110) a une ouverture d'installation (111), la plaque supérieure (113) est pourvue d'une rainure de placement (115) communiquant avec l'ouverture d'installation (111), et l'ensemble mélangeur (30) entre dans la rainure de placement (115) dans la première direction à partir de l'ouverture d'installation (111) ; et une partie de l'ensemble mélangeur (30) est située dans la cavité de logement (110), et est limitée par la plaque supérieure (113) dans la direction du premier axe de rotation, **caractérisé en ce que**
le cylindre de mélange (31) comprend une chambre d'alimentation (311) et une chambre de mélange (312) communiquant l'une avec l'autre dans une direction verticale, la lame d'agitation (35) est située à l'intérieur de la chambre de mélange (312), le fond de la chambre de mélange (312) s'étend radialement vers l'extérieur pour former un bord de jupe (314), et le bord de jupe (314) est limité par la plaque supérieure (113) ; ou
le cylindre de mélange (31) comprend une chambre d'alimentation (311) et une chambre de mélange (312) communiquant l'une avec l'autre dans une direction verticale, la lame d'agitation (35) est située à l'intérieur de la chambre de mélange (312), le cylindre de mélange (31) comprend une partie rétrécie (313), la partie rétrécie (313) est disposée au niveau d'une jonction entre la chambre d'alimentation (311) et la chambre de mélange (312), la partie rétrécie (313) entre dans la rainure de placement (115), et une paroi supérieure de la chambre de mélange (312) est limitée par la plaque supérieure (113).

2. Le dispositif de mélange (100) selon la revendication 1, dans lequel l'ensemble mélangeur (30) comprend en outre une partie de couplage (33a) raccordée à un fond du cylindre de mélange (31), la partie de couplage (33a) comprend un arbre de transmission (331), l'arbre de transmission (331) raccorde le deuxième élément de transmission (42) et la lame d'agitation (35), et dans une direction axiale, la lame d'agitation (35) est disposée sur un côté de la partie de couplage (33a), et le deuxième élément de transmission (42) est disposé sur un autre côté de la partie de couplage (33a).

3. Le dispositif de mélange (100) selon la revendication 2, dans lequel une sortie de décharge (346) est disposée sur un côté de la partie de couplage (33a) correspondant au deuxième élément de transmission (42), la partie de couplage (33a) définit un espace de support (34), et une soupape de décharge (36) est disposée dans l'espace de support (34) ; lorsque l'ensemble mélangeur (30) est raccordé à la partie d'installation (11), la soupape de décharge (36) ouvre la sortie de décharge (346) ; et lorsque l'ensemble mélangeur (30) est séparé de la partie d'installation (11), la soupape de décharge (36) ferme la sortie de décharge (346).

4. Le dispositif de mélange (100) selon la revendication 3, dans lequel la soupape de décharge (36) comprend un corps de soupape (361) et un élément élastique (362) agissant sur le corps de soupape (361), et la partie d'installation (11) est pourvue d'un bloc de joint d'about (116) ; et le bloc de joint d'about (116) est configuré pour venir en butée contre le corps de soupape (361) pour amener le corps de soupape (361) à surmonter une action de l'élément élastique (362) pour ouvrir la sortie de décharge (346).

5. Le dispositif de mélange (100) selon l'une quelconque des revendications 2 à 4, dans lequel la partie de couplage (33a) est capable de tourner par rapport au cylindre de mélange (31), pour limiter ou permettre à l'ensemble mélangeur (30) d'être séparé de la partie d'installation (11).

6. Le dispositif de mélange (100) selon l'une quelconque des revendications 1 à 5, dans lequel l'axe du moteur (40) est parallèle au premier axe de rotation (Z1), l'ensemble mélangeur (30) est raccordé à ou séparé de la partie d'installation (11) dans la première direction, et la première direction est perpendiculaire au premier axe de rotation (Z1) ; et dans la première direction, l'axe du moteur (40) est disposé côte à côte avec le premier axe de rotation (Z1), ou dans une direction perpendiculaire à la première direction, l'axe du moteur (40) est disposé côte à côte avec le premier axe de rotation (Z1).

7. Le dispositif de mélange (100) selon la revendication 1, dans lequel la partie de verrouillage comprend une partie de préhension (371b), et la partie d'installation (11) comprend la cavité de logement (110) pour recevoir l'ensemble mélangeur (30) ; dans la première direction, la partie d'installation (11) comprend un côté intérieur où la cavité de logement (110) est disposée et un côté extérieur opposé, et la partie de préhension (371b) est située sur le côté extérieur ; et la partie de préhension (371b) est capable d'entraîner de manière opérationnelle la partie de verrouillage afin qu'elle tourne entre l'état de verrouillage et l'état de déverrouillage.

8. Le dispositif de mélange (100) selon la revendication 7, dans lequel le premier axe de rotation (Z1) est disposé dans une direction verticale, et la première direction est perpendiculaire au premier axe de rotation (Z1) ; un axe de rotation de la partie de verrouillage est coaxial avec le premier axe de rotation (Z1), ou l'axe de rotation de la partie de verrouillage est parallèle à la première direction ; et une conduite d'entrée de liquide (12) est raccordée à la base de support (10), et la conduite d'entrée de liquide (12) communique avec le cylindre de mélange (31) dans la première direction.

9. Le dispositif de mélange (100) selon la revendication 7 ou la revendication 8, dans lequel la partie de verrouillage comprend en outre un bloc de verrouillage (372) faisant saillie de la partie de préhension (371b), la partie d'installation (11) est pourvue d'une rainure de verrouillage (137), la partie de préhension (371b) est capable de se déplacer par rapport au cylindre de mélange (31), pour amener le bloc de verrouillage (372) à s'engager dans ou se désengager de la rainure de verrouillage (137).

10. Le dispositif de mélange (100) selon la revendication 7 ou la revendication 8, dans lequel la partie de verrouillage comprend un corps de raccordement qui est agencé de manière concentrique avec la lame d'agitation (35), la partie de préhension (371b) s'étend vers l'extérieur à partir d'une périphérie extérieure du corps de raccordement, et le corps de raccordement est disposé sous la chambre de mélange (312).

11. Le dispositif de mélange (100) selon la revendication 10, dans lequel le corps de raccordement comprend deux parois en forme d'arc (373) disposées à l'opposé l'une de l'autre et deux parois droites (375), et les deux parois droites (375) sont disposées à l'opposé l'une de l'autre et sont raccordées séparément aux deux parois en forme d'arc (373) ; les deux parois en forme d'arc (373) sont agencées de manière concentrique avec la lame d'agitation (35), et une distance entre les deux parois droites (375) est sensiblement la même qu'une largeur de l'ouverture d'installation (111) ; la partie d'installation (11) est pourvue d'une paroi de blocage (117), et dans l'état de verrouillage, l'une des deux parois droites (375) vient en butée contre la paroi de blocage (117) ; et dans l'état de déverrouillage, les deux parois droites (375) affleurent respectivement à l'ouverture d'installation (111).
